(19)

Europäisches
Patentamt

European
Patent Office

Office européen
des brevets

(11)  **EP 4 468 191 A1**

(12)  # EUROPEAN PATENT APPLICATION

(43) Date of publication:
**27.11.2024  Bulletin 2024/48**

(21) Application number: **24177106.2**

(22) Date of filing: **21.05.2024**

(51) International Patent Classification (IPC):
**G06F 30/17** (2020.01)     **G06F 30/20** (2020.01)
**G06F 30/23** (2020.01)     **G06F 111/04** (2020.01)
**G06F 113/10** (2020.01)     **G06F 119/18** (2020.01)

(52) Cooperative Patent Classification (CPC):
**G06F 30/20; G06F 30/17; G06F 30/23;**
G06F 2111/04; G06F 2113/10; G06F 2119/18

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **22.05.2023  US 202318321628**

(71) Applicant: **Autodesk, Inc.
San Francisco, CA 94105 (US)**

(72) Inventors:
• **MESHKAT, Siavash Navadeh
San Francisco, 94105 (US)**

• **RODRIGUEZ, Jesus
San Francisco, 94105 (US)**
• **EOM, Jaesung
San Francisco, 94105 (US)**
• **WEISS, Benjamin McKittrick
San Francisco, 94105 (US)**
• **BURLA, Ravi Kumar
San Francisco, 94105 (US)**
• **MORRISON, Andrew Allan
San Francisco, 94105 (US)**

(74) Representative: **Fish & Richardson P.C.
Highlight Business Towers
Mies-van-der-Rohe-Straße 8
80807 München (DE)**

(54)  **ITERATIVE SHAPE MODIFICATION PROVIDING MAXIMUM SUSTAINABLE LOADS DURING COMPUTER AIDED GENERATIVE DESIGN**

(57)  Methods, systems, and apparatus, including medium-encoded computer program products, for computer aided design of physical structures include: obtaining a design space for a modeled object and boundary conditions including a location where load is applied; checking whether, the boundary conditions include a specified direction for the load; assigning a direction for the load at the location when no specified direction is included; iteratively modifying a three dimensional shape in the design space in accordance with a physical response of the modeled object determined by a numerical simulation employing a linear analysis, where the iterative modification comprises determining a respective maximum sustainable load for each of two or more versions of the modified three dimensional shape; presenting to a user the two or more versions of the modeled object having different shapes; and receiving a user selection of one of the two or more versions of the modeled object.

FIG. 1

**Description**

BACKGROUND

This specification relates to computer aided design of physical structures, which can be manufactured using additive manufacturing, subtractive manufacturing and/or other manufacturing systems and techniques.

Computer Aided Design (CAD) software has been developed and used to generate three dimensional (3D) representations of objects, and Computer Aided Manufacturing (CAM) software has been developed and used to evaluate, plan, and control the manufacture of the physical structures of those objects, e.g., using Computer Numerical Control (CNC) manufacturing techniques. Typically, CAD software stores the 3D representations of the geometry of the objects being modeled using a boundary representation (B-Rep) format. A B-Rep model is a set of connected surface elements specifying boundaries between a solid portion and a non-solid portion of the modelled 3D object. In a B-Rep model (often referred to as a B-Rep), geometry is stored in the computer using smooth and precise mathematical surfaces, in contrast to the discrete and approximate surfaces of a mesh model, which can be difficult to work with in a CAD program.

Further, CAD software has been designed so as to perform a generative design process, e.g., automatic generation of 3D geometry for a part or one or more parts in a larger system of parts to be manufactured. This automated generation of 3D geometry is often limited to a design space specified by a user of the CAD software, and the 3D geometry generation is typically governed by design objectives and constraints, which can be defined by the user of the CAD software or by another party and imported into the CAD software. The design objectives (such as minimizing the waste material or weight of the designed part) can be used to drive the geometry generation process toward better designs. The design constraints can include both structural integrity constraints for individual parts (i.e., a requirement that a part should not fail under the expected structural loading during use of the part) and physical constraints imposed by a larger system (i.e., a requirement that a part not interfere with another part in a system during use). For example, the design constraints can include maximum mass, maximum deflection under load, maximum stress, etc.

The inputs to a generative design process can include a set of input solids (B-Rep input) that specify boundary conditions for the generative design process. The set of input solids can include "preserve bodies", which should always be present in the design and which represent interfaces to other parts or locations on which boundary conditions should be applied (for example mechanical loads and constraints). Other regions in which geometry should or should not be generated can also be provided in a similar manner, such as input solids that define "obstacle bodies", which represent regions where new geometry should not be generated.

CAD programs have been used in conjunction with subtractive manufacturing systems and techniques. Subtractive manufacturing refers to any manufacturing process where 3D objects are created from stock material (generally a "blank" or "workpiece" that is larger than the 3D object) by cutting away portions of the stock material. Such manufacturing processes typically involve the use of multiple CNC machine cutting tools in a series of operations, starting with a roughing operation, an optional semi-finishing operation, and a finishing operation. In addition to CNC machining, other subtractive manufacturing techniques include electrode discharge machining, chemical machining, waterjet machining, etc. In contrast, additive manufacturing, also known as solid free form fabrication or 3D printing, refers to any manufacturing process where 3D objects are built up from raw material (generally powders, liquids, suspensions, or molten solids) in a series of layers or cross-sections. Examples of additive manufacturing include Fused Filament Fabrication (FFF) and Selective Laser Sintering (SLS). Other manufacturing techniques for building 3D objects from raw materials include casting and forging (both hot and cold).

However, in some cases the 3D models generated directly from the generative design process may not be suitable for manufacturing. For example, models from generative design may have rounded edges and may have shapes that are different from sketch models designed by humans.

Often, users of the CAD software are required to manually adjust the 3D models to generate modified 3D models that are suitable for manufacturing.

SUMMARY

This specification describes technologies relating to computer aided design of physical structures using generative design processes, where one or more boundary conditions including load(s) at specified location(s) are applied.

In general, one or more aspects of the subject matter described in this specification can be embodied in one or more methods (and also one or more non-transitory computer-readable mediums tangibly encoding a computer program operable to cause data processing apparatus to perform operations), including: obtaining a design space for a modeled object and one or more boundary conditions for numerical simulation that employs a linear analysis, wherein the modeled object corresponds to a physical structure and includes a preserve geometry, and wherein the one or more boundary conditions includes a location on the preserve geometry at which a load is to be applied; checking whether the one or more boundary conditions include a specified direction for the load at the location; assigning at least one direction for the load at the location when no specified direction is included in the one or more boundary conditions; iteratively modifying a three dimensional shape of the modeled object in the design space in accordance with a physical response of the modeled object determined by the numerical simulation performed using either the specified direction or the at least one direction for the load at the location, wherein the iterative modification includes determining a respective maximum sustainable load for each of two or more versions of the modified three dimensional shape, wherein the maximum sustainable load is determined based on a predefined, not-user-specified load magnitude for the load at the location; presenting to a user the two or more versions of the modeled object having different shapes produced by the iteratively modifying of the three dimensional shape, including presenting the respective maximum sustainable load for each of the two or more versions of the modeled object; and receiving a user selection of one of the two or more versions of the modeled object, wherein the two or more versions are useable in manufacturing the physical structure using one or more computer-controlled manufacturing systems.

The iteratively modifying can include iteratively generating the two or more versions of the three dimensional shape without use of a stress constraint, wherein the linear analysis is linear stress analysis, wherein each version of the two or more versions when associated with a first material is determined to withstand a corresponding first maximum sustainable load that is different from a corresponding second maximum sustainable load that is determined for the same version of the modeled object when associated with a second, different material, and wherein both the first maximum sustainable load and the second maximum sustainable load are determined after a first iteration that produced that version of the three dimensional shape and before a second iteration to modify that version to generate a next version of the three dimensional shape.

The location on the preserve geometry can be a first location, wherein obtaining the one or more boundary conditions for the numerical simulation can include: obtaining a second location on the preserve geometry at which a load is applied, wherein a first load magnitude at the first location is different from a second load magnitude at the second location, wherein at least one direction for the load at the second location is assigned, wherein the numerical simulation is performed using the direction of the load at the first location and the direction of the load at the second location, wherein the maximum sustainable load is determined for each of the first and second locations, and wherein the three dimensional shape of the modeled object is iteratively modified in accordance with a relative difference between the first load magnitude at the first location and the second load magnitude at the second location.

The location on the preserve geometry can be a first location, wherein obtaining the one or more boundary conditions for the numerical simulation can include: obtaining a second location on the preserve geometry at which a load is applied, wherein the first location and the second location are i) on separate preserve bodies part of the preserve geometry or ii) on separate surface of a single preserve body part of the preserve geometry, and obtaining a relative difference between a first load magnitude of the load applied at the first location and a second load magnitude of the load applied at the second location, wherein the three dimensional shape of the modeled object is iteratively modified in accordance with the relative difference between the first load magnitude at the first location and the second load magnitude at the second location, and wherein the relative difference is used to distribute the predefined, not-user specified load magnitude for the load at the first and second locations.

The determination of the respective maximum sustainable load for each of the two or more versions of the modified three dimensional shape can include for each version: computing, for a specified material, a ratio between an allowable stress limit for the version of the three dimensional shape of the modeled object and a maximum stress experienced by the modeled object, wherein the allowable stress limit and the maximum stress are determined for the predefined, not-user-specified load magnitude applied at the location on the preserve geometry; and applying the ratio to the predefined, not-user specified load magnitude to determine the maximum sustainable load by the modeled object at the location where load is applied.

The one or more methods can include: for at least one iteration of the iterative modification, pre-computing a maximum stress estimated to be experienced by the modeled object based on applying the load of the predefined, not-user-specified load magnitude at the location on the preserve geometry, wherein the maximum stress is pre-computed as an approximation for isotropic materials having a Poisson ratio approximated to a predefined value, wherein pre-computing the maximum stress is used as the maximum stress when computing the ratio, wherein the specified material for manufacturing the modeled object is an isotropic material. The method can also include obtaining a set of materials specified for the modeled object for use in manufacturing, wherein the iteratively modifying can include for each iteration of the iterative modification: computing a first ratio for a first specified material and a second ratio for a second specified material, the first and the second specified materials being isotropic materials, wherein computing the first and second ratios includes: dividing an allowable stress limit for the modeled object of a respective first or second specified material to the pre-computed maximum stress to determine the first and the second ratios as approximations for isotropic materials; and determining a first maximum sustainable load for the first specified material and a second maximum sustainable load for the second specified material, wherein the first and the second maximum sustainable loads are associated with the same version of the modified shape but for different specified materials.

The obtaining of the one or more boundary conditions can include obtaining a user-provided desired load magnitude for the numerical simulation, and wherein the method can include: presenting to the user an indication of a difference between a maximum sustainable load for at least one of the two or more versions of the modeled object and the user-provided desired maximum load.

The assigning of the at least one direction for the load at the location can include: selecting the least one direction for the load from one or more directions in a Cartesian coordinate system defined for a surface of the preserve geometry including the location at which the load is applied.

The assigning of the at least one direction for the load at the location when no specified direction is included in the one or more boundary conditions can include: identifying a surface of at least a portion of the preserve geometry that is in contact with another surface of another part in an assembly of parts including the preserve geometry; identifying the location at the surface of at least the portion of the preserve geometry as a contact location between at least the portion of the preserve geometry and the other surface of the other part; and assigning the at least one direction for the load at the identified location as a direction of a surface normal of the surface including the identified location.

The two or more versions of the modeled object can be presented consecutively one after another during the iterative modification of the three dimensional shape, wherein receiving the user selection of one of the two or more versions of the modeled object is in response to a request to interrupt the iterative modification, wherein the method can include: receiving an indication of a user-defined load magnitude to be sustained at the location; and in response to the received indication, presenting the user selected version of the modeled object with a different maximum sustainable load associated with a different material, wherein the different maximum sustainable load is closer to the indication of the user-defined load magnitude compared to the respective maximum sustainable load presented with the user selected version of the two or more versions of the modeled object.

In some instances, the method can include: generating a toolpath specification for a manufacturing machine using the user selected version of the three dimensional shape; and manufacturing at least a portion of the physical structure, or a mold for the physical structure, with the manufacturing machine using the toolpath specification.

In addition, one or more aspects of the subject matter described in this specification can be embodied in one or more systems that include one or more non-transitory computer-readable mediums tangibly encoding a computer program, and one or more data processing apparatus configured to run the instructions of the program to cause the one or more data processing apparatus to perform the operations as specified in paragraphs

**[0021]** [0009]-[0019] above and as specified in the detailed description below. Moreover, the one or more systems can include the one or more computer-controlled manufacturing systems used to manufacture at least a portion of the physical structure, or a mold for the physical structure, using the toolpath specifications generated using the three dimensional shape of the modeled object.

Particular embodiments of the subject matter described in this specification can be implemented to realize one or more of the following advantages. First, based on the implementations of the present disclosure, a maximum sustainable load can be iteratively presented with the modifications of the shape of the modeled object without restricting the optimization to provide unusable results. The modifications of the shape are based on a numerical simulation that employs a linear analysis that allows the determination of the maximum sustainable load based on scaling of a load magnitude that is not-user-provided or specified and is not used to restrict the optimization. The present subject matter supports users to use generative design techniques without the need to provide specific load magnitudes to be sustained by a modeled part. This can streamline the process and provide faster feedback to the user for the specifics of the model and its development during optimization.

Further, a scaling factor to determine a maximum sustainable load at a location can be automatically computed at each generative design iteration and applied to determine the maximum sustainable load of the shape version at that iteration for a vast range of materials. Thus, with each iteratively generated version of a shape of a model, maximum sustainable loads at load locations for models associated with different materials can be automatically provided to the user in a fast and computationally efficient manner. Further, a topology optimization process can be applied to any number of materials without an increase in computational costs. The computations can be estimated based on an initially pre-computed ratio for isotropic materials, which can provide fast yet accurate results for the estimated load magnitude.

Moreover, the determination of the maximum sustainable load is performed more efficiently and with reduced computational expense since re-running the optimization is not needed even when the user-provided load magnitude is a non-physical condition. For example, in linear stress analysis, if intended load for a load location at a part results in a safety factor that is less than a threshold amount, e.g., 1.0, the intended load can be considered as a non-physical condition. Thus, if a user provides a load magnitude that results in a safety factor below such a threshold amount, the optimization can be interrupted as the safety factor is lower than acceptable. If the user recognizes that the load magnitude that he provided is a non-physical condition, the optimization may need to be redefined and re-run based on new parameters, which could potentially lead to the same safety factor considerations if the user is unaware of the exact load conditions. To address such a drawback, the present disclosure provides techniques to perform shape modifications without stress constraints that provide working models in an efficient and accurate manner to support users and inform them of the load magnitude that can be withstand at load location(s). Also, the solution provides working result for the generative design that can be readily provided for manufacturing. No load magnitude need be provided by the user, or if provided, the load magnitude can be a non-physical one. Regardless of the nature of the load magnitude, including its absence, the optimization process can be executed thru to convergence since there are no stress constraints that are violated during the optimization process in a manner that would terminate the process.

The details of one or more embodiments of the subject matter described in this specification are set forth in the accompanying drawings and the description below. Other features, aspects, and advantages of the invention will become apparent from the description, the drawings, and the claims.

BRIEF DESCRIPTION OF THE DRAWINGS

FIG. 1 shows an example of a system usable to define application of boundary conditions to represent a modeled object during numerical simulation in a generative design process.

FIG. 2 shows an example of iteratively modifying a 3D shape of a modeled object in accordance with a physical response determined by a numerical simulation performed using at least one direction for a load applied at a location at the preserve geometry of the modeled object.

FIGS. 3A-C show examples of applying boundary conditions to a model.

FIG. 4 shows an example of iteratively modifying a 3D shape of a modeled object and informing the user of a maximum sustainable load of versions of the modeled shape based on a multivariate loading process.

FIGS. 5A, 5B, and 5C show examples of two versions generated during a generative design process based on obtained design space and boundary conditions as defined through the user interface of FIGS. 3A-C and based on modifications performed according to the implementations of the present disclosure.

FIGS. 6A-C show examples of defining and executing a topology optimization based on specified non-physical loading conditions provided by a user for iteratively modifying the shape of a 3D model.

FIG. 7 shows an example of iteratively designing a 3D shape of a modeled object based on iterative guidance of the modifications of the model based on user input and iteratively providing sustainable load magnitude of the modified shape version.

FIG. 8 shows a schematic diagram of a data processing system including a data processing apparatus, which can be programmed as a client or as a server.

Like reference numbers and designations in the various drawings indicate like elements.

DETAILED DESCRIPTION

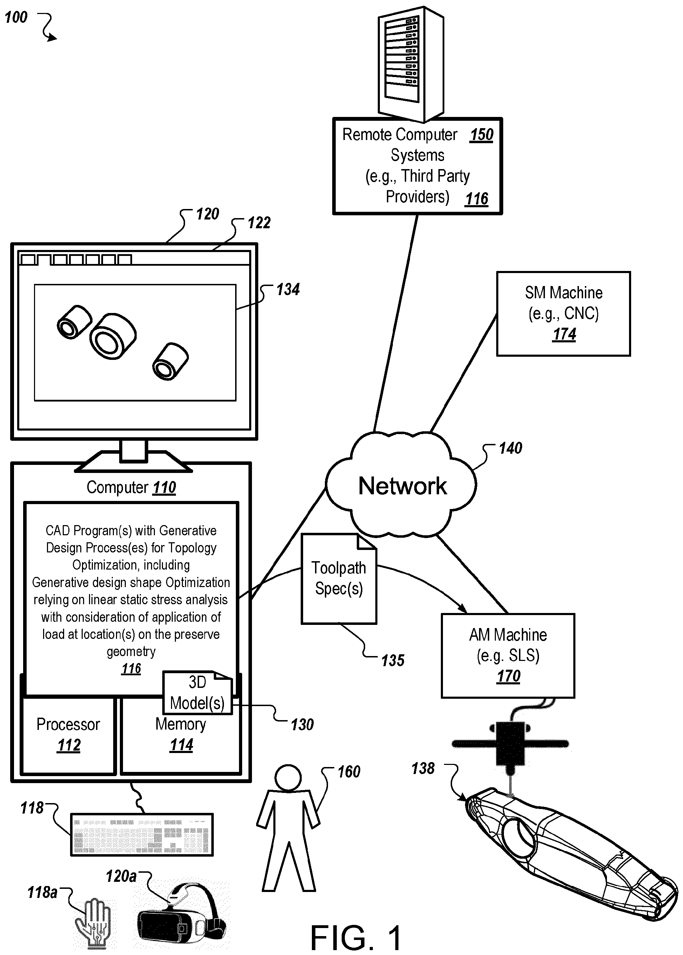

FIG. 1 shows an example of a system 100 usable to define application of boundary conditions to a modeled object during numerical simulation in a generative design process. A computer 110 includes a processor 112 and a memory 114, and the computer 110 can be connected to a network 140, which can be a private network, a public network, a virtual private network, etc. The processor 112 can be one or more hardware processors, which can each include multiple processor cores. The memory 114 can include both volatile and non-volatile memory, such as Random Access Memory (RAM) and Flash RAM. The computer 110 can include various types of computer storage media and devices, which can include the memory 114, to store instructions of programs that run on the processor 112, including Computer Aided Design (CAD) program(s) 116, which implement 3D modeling functions and can include one or more generative design processes for topology optimization with numerical simulation.

Generative design is a process where a designer or engineer can provide a set of requirements in terms of loads, boundary conditions, materials, initial starting shape, manufacturing constraints and other parameters and the CAD program(s) 116 create various shapes that satisfy the requirements. Generative design allows the users to choose from a set of design/shape options that are generated so that specific requirements of the users are met. The designs are used to create physical structures through 3D printing or other manufacturing processes like milling or casting.

As used herein, CAD refers to any suitable program used to design physical structures that meet design requirements, regardless of whether or not the program is capable of interfacing with and/or controlling manufacturing equipment. Thus, CAD program(s) 116 can include Computer Aided Engineering (CAE) program(s), Computer Aided Manufacturing (CAM) program(s), etc. The program(s) 116 can run locally on computer 110, remotely on a computer of one or more remote computer systems 150 (e.g., one or more third party providers' one or more server systems accessible by the computer 110 via the network 140) or both locally and remotely. Thus, a CAD program 116 can be two or more programs that operate cooperatively on two or more separate computer processors in that one or more programs 116 operating locally at computer 110 can offload processing operations (e.g., generative design and/or numerical simulation operations) "to the cloud" by having one or more programs 116 on one or more computers 150 perform the offloaded processing operations.

For structural engineering, topology optimization is a primary technique used to achieve generative designs. During a topology optimization processes, a 3D shape of a modelled object along with design criteria including boundary conditions, manufacturing constraints, etc., can be initially provided, where the space can be iteratively updated or modified based on feedback from numerical simulation for the structural performance as a physical response that is assessed for the current shape.

Further, the numerical simulation performed by the systems and techniques described in this document can simulate one or more physical properties and can use one or more types of simulation to produce a numerical assessment of physical response (e.g., structural response) of the modelled object. For example, finite element analysis (FEA), including linear static FEA, finite difference method(s), and material point method(s) can be used. Further, the simulation of physical properties can also include Computational Fluid Dynamics (CFD), Acoustics/Noise Control, thermal conduction, computational injection molding, electric or electro-magnetic flux, material solidification (which is useful for phase changes in molding processes) simulations, linear transient dynamic analysis, normal mode analysis, buckling analysis, and/or heat transfer analysis. Topology optimization typically leverages numerical assessment techniques, such as finite element techniques, in order to perform the necessary shape adjustments at each iteration.

In some implementations, numerical simulation is performed in a distinct solver program, e.g., a general purpose Finite Element solver, which can be integrated into CAD program 116 or shared among multiple programs, including CAD program 116. In some implementations, the solver program can also run in the cloud on one or more computers 150. Moreover, in some implementations, the generative design program(s) can be run in the cloud from an API (Application Program Interface) that is called by a program, without user input through a graphical user interface.

During a design phase of an object that is to be manufactured, a user interacting with the CAD program(s) 116 to design a shape for the object may not know the exact loading conditions on a given part and at the same time be aware whether it is constrained (i.e., know the kinematics of the part). For example, the user may know that the part is included in an assembly as a structural setup that includes the part together with other parts and elements to provide particular functions. The user may know that the part connects with other parts or elements while in use in the structural setup. Thus, the user may know which surface(s) of the part that are in contact/connect with another surface of other parts and/or part element. The connecting surface(s) would be where pressure is provided in the structural setup. However, while aware of the location(s) where load is applied, the user may not know the magnitude of the load that the part should withstand. Thus, a designer (such as a novice designer) may request that the CAD program(s) 116 generates a result for a modeled shape of the part based on providing a load location (as a direct indication of the location or through identification the location based on provided connection surfaces with other surfaces of other parts) and obtain from the CAD program(s) 116 indication of a load magnitude that the part can withstand at defined locations where load is applied.

The CAD program(s) 116 present a user interface (UI) 122 on a display device 120 of the computer 110, which can be operated using one or more input devices 118 of the computer 110 (e.g., keyboard and mouse). Note that while shown as separate devices in FIG. 1, the display device 120 and/or input devices 118 can also be integrated with each other and/or with the computer 110, such as in a tablet computer (e.g., a touch screen can be an input/output device 118, 120). Moreover, the computer 110 can include or be part of a virtual reality (VR) and/or augmented reality (AR) system. For example, the input/output devices 118, 120 can include a VR/AR input glove 118a and/or a VR/AR headset 120a. In any case, a user 160 interacts with the CAD program(s) 116 to create and modify 3D model(s), which can be stored in 3D model document(s) 130.

An initial 3D model can be an input to a generative design process through the user interface 122. The initial 3D model can be a set of preserve bodies 134 and potentially obstacle bodies. In some examples, the initial 3D model can be an existing part (previously designed) that is provided for re-design. In those cases, the preserve bodies can be extracted from the faces with which the existing part contacts other parts of a broader assembly incorporating the part. Also, the preserve bodies can be user selected bodies that do not rely on information about the interaction and/or connection of the part with other parts. In some cases, the definition of the preserve bodies can be a combination of extracting preserve bodies from an understanding of the connections of the part in the broader assembly as well as user selections. For example, a proposal of preserve bodies can be provided based on an identification of faces in connection with other parts in the assembly (e.g., particular faces in connection with other surfaces in the broader assembly). The provided proposal can be displayed to a user, where the user can select some or all of the preserve bodies that were identified and presented, as well as optionally include more preserve bodies or modify existing ones. The input preserve geometry can be unconnected modelled solids, where the generative design process is used to produce a new 3D geometry that connects the input preserve solids 134. A design space can be obtained to define a volume inside which the part is to be designed during topology optimization. The design space can be obtained by determining a bounding volume or a convex hull for the input model, or another technique. In some cases, the user may explicitly specify a solid body as the design space.

As described herein, in some implementations, the CAD program(s) 116 implement at least one generative design process, which enables the CAD program(s) 116 to generate one or more portions of a 3D model (or the entirety of a 3D model) automatically based on design criteria including design objective(s) and constraint(s), where the geometry of the design is iteratively optimized based on numerical simulation feedback. Generative design users 160 specify preserve geometries 134 that are connected to a design space, which is the only part of the geometry that can change during the optimization phase. The user 160 can define a topology optimization problem for a generative design process to produce a desired 3D model from the design space.

The design criteria can be defined by the user 160, or by another party and imported into the CAD program(s) 116. The design criteria can include structural integrity constraints for individual parts (e.g., a requirement that a part should not fail under the expected structural loading during use of the part) and/or physical constraints imposed by a larger system (e.g., a requirement that a part be contained within a specified volume so as not to interfere with other part(s) in a system during use; assemblies with linear contact can be supported by the CAD software). The user 160 (or another party) can specify one or more boundary conditions for numerical simulation, e.g., a loading condition and a displacement constraint for use in various types of physics simulations, used during generative design processes. In some instances, the user can specify a location where the load is to be applied without specifying a load magnitude and/or direction.

For example, during a particular topology optimization task initiated by the user 160, preserve geometry 134 that includes three or more distinct preserve bodies can be defined as shown in FIG. 1. In other examples, the preserve geometry can include a single preserve body, or only two preserve bodies, among other examples of a number of preserve bodies. The boundary conditions for numerical simulation can be specified in relation to respective surfaces of these preserve bodies 134. For example, the boundary conditions can include a location on at least a portion of the surface of one or more of the preserve bodies at which load is to be applied. Further and optionally, different types of boundary conditions can be specified in relation different surfaces of one or more preserve bodies, or in relation to the same surface of a preserve body.

In some implementations, the user 160 (or other person or program) can specify a design space for an object to be manufactured, a numerical simulation setup (e.g., load(s) and material(s)) for numerical simulation (e.g., FEA, CFD, Acoustics/Noise Control, thermal conduction, computational injection molding simulations, electric or electro-magnetic flux, material solidification, etc.) of the object, at least one design objective (e.g., minimize material usage) for the object, and at least one design constraint (e.g., a volume constraint) for the object.

In some implementations, the inputs for use in numerical simulation and generative design processes can include one or more regions of a current 3D model in which to generate new 3D geometry, loading case(s) defining one or more load locations and one or more different directions for the load(s) to be borne by a physical structure being designed (with load magnitude(s) being optional), one or more materials (e.g., one or more isotropic solid materials identified as a baseline material model for the design space), one or more generative design processes to use, and/or one or more lattice topologies to use in one or more regions of the design space.

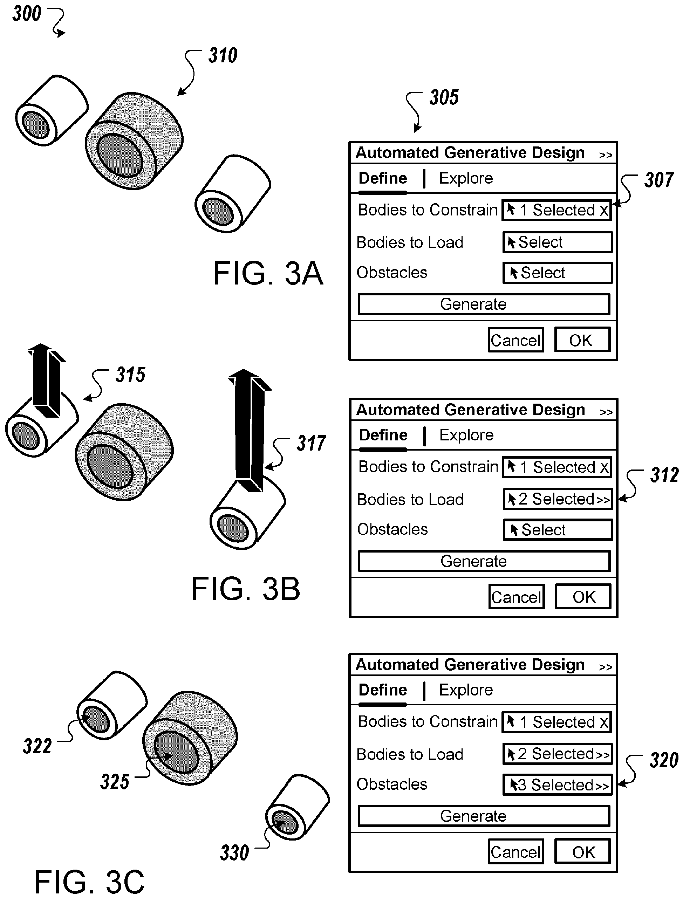

Moreover, the CAD program(s) 116 can provide user interface elements in the UI 122 to enable the user 160 to specify the various types of inputs noted above, and all (or various subsets) of these inputs can be used in the generative design and numerical simulation processes described in this document. Further details for the functionality and available interactions for the user 160 with the UI 122 are provided throughout the description and in relation to FIGS. 3A, 3B, and 3C, FIG. 6A, and FIG. 8.

The CAD program(s) 116 can use various generative design processes, which can optimize the shape and topology of at least a portion of the 3D model. The optimization of the geometric design of the 3D model(s) by the CAD program(s) 116 can involve topology optimization, which is a method of light-weighting where the optimum distribution of material is determined by minimizing an objective function subject to design constraints.

Topology optimization is an iterative optimization process where an objective is minimized by adding and/or removing material based on given constraint conditions. The objective is typically defined as a compliance or a form of compliance (e.g., strain energy). Optimization constraints typically restrict the addition and/or removal of material and also restrict the regions inside the model where the material can be added or removed. There are several types of constraints that can be used in topology optimization. A volume fraction constraint sets a limit on the amount of material that can be removed from the model. As the volume fraction is reached, the optimizer rearranges the material in the model so that the objective can be minimized subject to the constraint. A stress constraint limits the amount of stress the model can undergo. The optimizer adds, removes, or rearranges the material in the model to satisfy this constraint. A thickness constraint limits the thickness of at least a portion or section in the model. The portion or section in the model is prevented from going below specified a value. A displacement constraint limits a maximum amount of deformation the model can undergo. Manufacturing constraints are specific to manufacturing methods used in the fabrication of the parts/models, e.g., additive (3D printing), milling and die-casting constraints.

There are two primary categories of topology optimization, density-based approaches and boundary-based approaches. Density-based approaches (e.g., SIMP (Solid Isotropic Material with Penalization) or homogenized methods) discretize the volume of the part into individual elements, and assign a density to each discrete element. Then the densities at elements are varied between fully occupied and fully empty while minimizing the objective(s) subject to the constraints. Boundary-based approaches instead track the shape of the external interface of the solid part and move the boundary such that the constraints are satisfied and the objective(s) are minimized, such as in a level-set method.

The quality of generative design outcomes are a function of the accuracy of the approach used when applying boundary conditions, and the approach(es) described in this document provide a robust process that enhances the accuracy of the results, while simplifying the load application as a boundary condition in the context of generative design. Most topology optimization workflows rely on linear analyses such as linear analysis of the static stress. Topology optimization in its fundamental form, without stress constraints, aims to maximize stiffness subject to a volume constraint, and thus, it is independent of the load magnitude. When relying on such linear analysis during topology optimization, magnitude(s) of the load applied at location(s) of the part can be a condition that does not have to be user provided to perform the optimization process as topology optimization without stress constraints does not depend on the load magnitude.

In some implementations, the topology optimization can rely on different linear analyses associated with different observable quantities, such as temperature, heat flux, stress, critical load, etc. Different observables can be considered to determine a maximum sustainable load for a location(s) where load is applied. For example, a steady state thermal/heat transfer analysis can be employed in a numerical simulation where temperature and heat flux can be defined as observable quantities. As another example, linear pre-stressed modal analysis can be employed where the observable quantities can be defined as a first mode of vibration and stress. As another example, linear buckling analysis can be employed, where the observable can be the critical loading. Further, fatigue analysis is another linear analysis where the observable can be defined as the stress, maximum cycles to failure, and an S-N (Stress Life) curve. Also, linear electromagnetic, linear electrostatics, and linearly coupled thermo-mechanical, electro-mechanical systems are additional linear analysis types that can be employed in the numerical simulation and based on respective observables, a maximum sustainable load at different locations can be determined for a iteratively modified and provided shape as discussed throughout the present disclosure.

If the topology optimization relies on analysis that is linear, increasing the load at a given location by a scaling factor $s$ will result in an increase in other quantities such as stresses or displacements by the same amount $s$. As such, the increase of the load at a location of the part is proportional to the experienced stress. In addition, the strain energy density, which drives the optimization process, will have the same distribution scaled by a factor of $s^2$, which will result in the same topological distribution of material. Therefore, the exact magnitude of the load applied to a part is not actually required to perform accurate topology optimization.

The approach(es) described in this document defining how to apply boundary condition(s) to iteratively modify a 3D shape of a part improves the technical field of computer-aided design, and in particular, improves the utility of generative design in the technical field of computer-aided design. Even if exact loading conditions are not initially available for the user to initiate a design phase of a 3D shape (e.g., the user has insufficient understanding of the maximum sustainable load of the part), the topology optimization can be executed to provide working models which are provided with respectively computed sustainable load magnitudes. Since the topology optimization is driven by a linear static stress analysis and it aims to maximize stiffness subject to a volume constraint, the generative design approach as described in this document can provide accurate results as to the optimized shapes and perform computations that use an arbitrary load magnitude (e.g., in one or multiple different load cases for a load direction) of an applied load at an identified location at the preserve geometry to provide a maximum sustainable load at each iteration of the optimization.

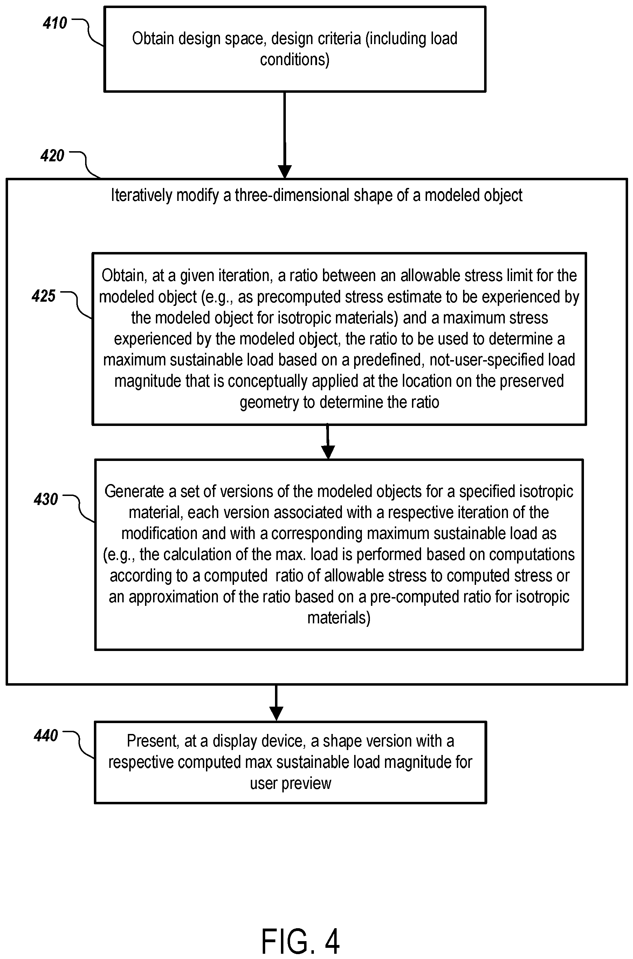

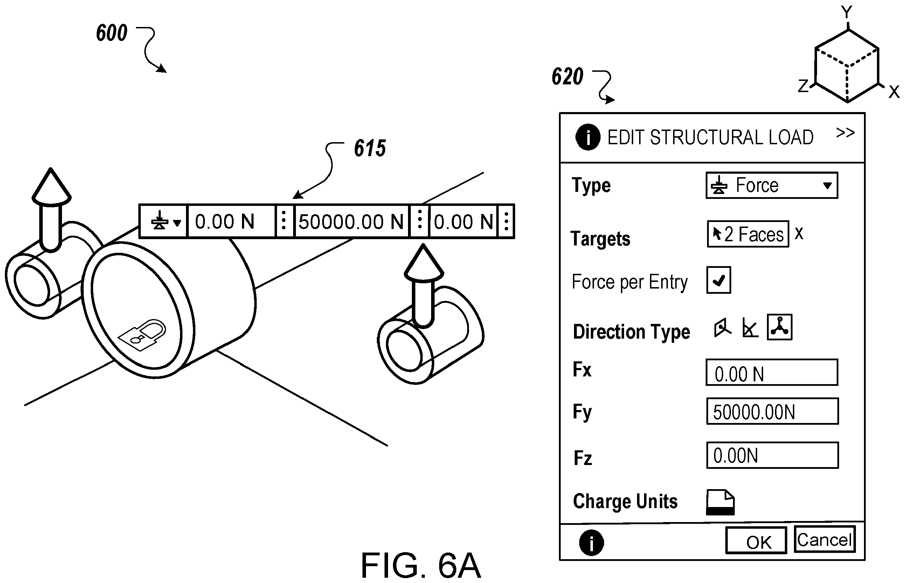

Additionally, even if the exact load magnitude that is to be sustained is provided, the approach described in this document can still provide results to the user that can serve as a reference for comparison with this initially provided load magnitude. The present approaches can help a user to identify how a shape of a modeled object can evolve and what load magnitude it can support. In this way, the user may be informed that an initial load magnitude that could have been used for the definition of the topology optimization can be too restricting to produce working results. For example, the user can interpret that such an initial load magnitude could be a non-physical condition that would limit the optimization process if applied. For example, if the user provides a non-physical condition (e.g., see FIGS. 6A-C) and that condition is used for the topology optimization to constraint the stress, the optimization process may be unable to satisfy stress constraints with a meaningful model representation. Thus, if a load magnitude is used for the topology optimization to constrain the stress, a generated model can be a meaningless model representation. In those cases, if the stress is constrained based on a non-physical load magnitude condition, and such a meaningless model results, the user may not be provided with a guidance as to why the modification resulted in such a non-workable solution. This can be a frustrating experience for the user. In contrast, with the presently disclosed subject matter, the user is provided with iteratively modified versions of a shape of a modeled object with information about the load magnitude that can be sustained by the shape, to directly inform the user of a meaningful model based on an initial design problem. The modified version can be iteratively generated to provide multiple options for the user, where additionally, the user may indicate a request to change a material relevant for the model and be guided as to the resulting change of the load magnitude that can be sustained by the modeled object to determine a version to be used for manufacturing. As described, the provided information for the maximum sustainable load magnitude for a given version of the shape with respect to multiple materials can be performed faster and with reduced resource expenditures due to the use or the multivariant loading process as described throughout the present disclosure and for example, in relation to FIG. 4.

In accordance with the present disclosure, the generative design process can be executed without a stress constraint and versions of shapes of the modeled object are provided with respective maximum load magnitudes. The provided versions at different iterations can also be associated with seeking user feedback for the generated shape and magnitude specifics. For example, a user who find the maximum load not matching the user's goals, can ask for information about the load if the shape is produced from another material. The present disclosure can support a feedback process to inform a user of inapplicability of the provided load magnitude and a suggestion to redefine the problem, to consider another solution (e.g., different material) with a proposed load magnitude as a maximum load that can be sustained by the part, or to re-run the process with a modified load condition (e.g., change of location, modified load direction, or other design criteria).

In any case, the user 160 can be enabled by the CAD program(s) 116 to define (and redefine) a problem setup and run the generative design process multiple times. Once the user 160 is satisfied with a generatively designed 3D model, the 3D model can be stored as a 3D model document 130 and/or used to generate another representation of the model (e.g., toolpath specifications for a manufacturing system). This can be done upon request by the user 160, or in light of the user's request for another action, such as sending the generatively designed 3D model 130 to one or more computer-controlled manufacturing systems, e.g., a subtractive manufacturing (SM) machine 174 and/or an additive manufacturing (AM) machine 170 which can be directly connected to the computer 110, or connected via a network 140, as shown. This can involve a post-process carried out on the local computer 110 or a cloud service to export the 3D model to an electronic document from which to manufacture. Note that an electronic document (which for brevity will simply be referred to as a document) can be a file, but does not necessarily correspond to a file. A document 130 may be stored in a portion of a file that holds other documents, in a single file dedicated to the document in question, or in multiple coordinated files. In addition, the user 160 can save or transmit the 3D model as the document 130 for later use. For example, the CAD program(s) 116 can store or send the document 130 that includes the generated 3D model in a local or external storage space.

The CAD program(s) 116 can provide a document 135 (having toolpath specifications of an appropriate format generated based on model of the document 130) to the one or more computer-controlled manufacturing systems to build a structure corresponding to the 3D model, e.g., to AM machine 170 and/or SM machine 174, to create a complete structure 138.

The SM machine 174 can employ one or more subtractive manufacturing techniques, e.g., a Computer Numerical Control (CNC) milling machine, such as a multi-axis, multi-tool milling machine, to carve the structure 138 out of stock material. The SM machine 174 can be a 2.5-axis CNC machine, where the freedom of movement of the spindle and attached tool (e.g., a rotary cutter or router selected from a set of available tools) is limited to the x-y plane for most milling, and only moves in the z direction in discrete steps.

However, the SM machine 170 can also be a 3-axis CNC machine, where the spindle has full freedom of movement in each of the x, y and z dimensions, i.e., the tool can move in all three axes simultaneously, or the SM machine can be a multi-axis machine, where the tool can translate in three axes (x, y, z) and rotate in two axes (roll and yaw) simultaneously while cutting a workpiece. Further, rather than (or in addition to) using the SM machine 174, the AM machine 170 or other manufacturing machinery, e.g., machinery for casting and forging (both hot and cold) can be used to build the structure 138 from source material.

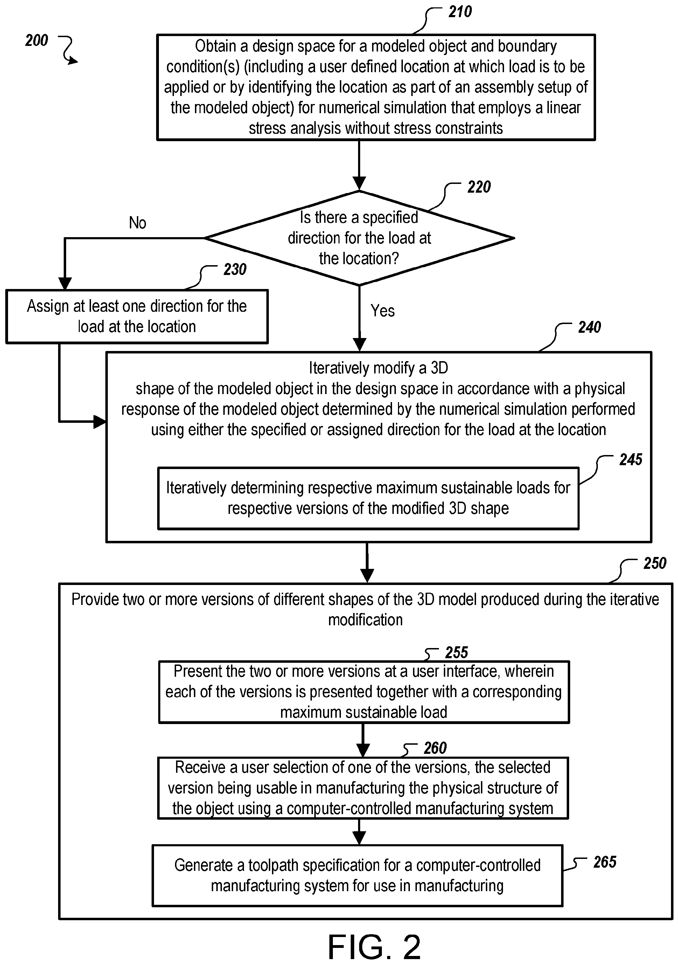

FIG. 2 shows an example 200 of iteratively modifying a 3D shape of a modeled object in accordance with a physical response determined by a numerical simulation performed using at least one direction for a load applied at a location at the preserve geometry of the modeled object. The location where the load is applied can be provided at the surface of the preserve geometry, e.g., as on the example preserve geometry 134 of FIG. 1, where a maximum sustainable load of the iteratively modified shape at each iteration can be determined, e.g., by CAD program(s) 116. The topology optimization can be performed based on a linear analysis, for example, based on a linear stress analysis without stress constraints. Other example linear analyses include steady state thermal/heat transfer analysis, or linear pre-stressed modal analysis, among other example analysis as discussed in the present disclosure. The iterative modification can include logic for determining a maximum sustainable load of each shape at each iteration that can be provided to the user.

In some implementations, more than one loading locations can be provided, where those locations can be on separate preserve bodies (as shown in FIG. 1 and FIG. 3A) or on separate surfaces of a single preserve body. In some implementations, the load magnitudes at these load locations can be provided as absolute values or can be provided in relative form as a ratio between the load magnitudes at these locations. For example, the user can provide user-specified graphical representations of the load magnitudes for the respective locations without specifying load magnitude numbers, or can provide input for the ratio between the magnitudes (e.g., as a direct ratio input or based on a graphical representation suggesting quantitative relativeness between two values such on a scale with arbitrary units).

At 210, a design space for the modeled object and boundary condition(s) for numerical simulation (during generative design) that employs a linear analysis (e.g., linear stress analysis) are obtained, e.g., by a CAD program(s) 116. The design space for the modelled object is the volume inside which the part is to be designed. The design space can include a bounding volume including an initial specification of one or more outer shapes of the 3D topology for the object. The design space can include 3D model(s), designed in or loaded into CAD program(s) 116, e.g., starting solid body, which serves as a sub-space of an optimization domain of a generative design process.

The design space can also have an associated set of input solids, where the boundary condition(s) can specify a location (or more) on their surface (of one or more of the solids) where load is to be applied. Note that the boundary condition(s) are specified in relation to a surface(s) of the input solid(s), not necessarily in relation to the entire input solid(s).

In some implementation, in addition to the modeled object corresponding to a physical structure, the modeled object also includes at least one surface of at least a portion of geometry to be preserved, and one or more obtained boundary conditions can be specified in relation to the at least one surface to define a location and optionally a direction of an applied load at the location. In some implementations, more than one load locations can be specified at one or more surfaces of a preserve body or at separate preserve bodies part of the modeled object.

In some implementations, a loading condition can be specified in relation to a surface of at least one input solid body obtained with the design space. The load condition can be defined through a user interface, such as the UI 122 of FIG. 1 that enables the user 160 to generate and/or select any suitable surface(s) with which to specify boundary condition(s). For example, a boundary condition can be specified for each or some of the bodies in the design space as selected by the user 160.

In some implementations, the loading condition does not specify the location(s) where the load(s) is applied. A location can be inferred from a setup of the modeled object, for example, as part of an assembly where it is in contact with other parts. In some implementations, the design space includes the modeled object as a part included in an assembly with other one or more parts in connection with the part. In some implementations, a surface of at least a portion of the preserve geometry of the modeled object that is in contact with another surface can be identified as the location at which the load is to be applied. Based on identifying that a surface of the preserve geometry is in contact with another surface in the assembly, the location of that surface contact between at least a portion of the preserve geometry and the other surface (in the assembly) can be automatically identified and used as the load location for the generative design of the modeled object.

In some implementations, the boundary condition for the load as obtained at 210 does not necessarily include a load magnitude. It may be possible that the user does not know the exact magnitude(s) of the load(s) applied to the object, but only their direction(s). It may be also possible that the user does not know the exact magnitudes but can provide input for the relativeness between the loads applied at multiple locations, e.g., a ratio of 1 to 2 for loading conditions applied at two locations of a part. In some other cases, the user may assume that a particular magnitude is the exact magnitude, however such magnitude may not correspond to the physics of the part that is designed. In accordance with the present implementations, even when the user does not provide an exact magnitude for the load at the location where it is applied, or even when the user provides a load magnitude that is wrong or inaccurate, the generative design modifications of the present invention can be performed without a stress constraint and versions of the modified shape can be provided together with a maximum sustainable load at the locations where load is applied. Thus, the modifications will yield meaningful results with references to their maximum sustainable loads even when no load magnitude(s) or incorrect load magnitude(s) are provided by the user. The maximum sustainable load can be determined as part of the iterative modifications in accordance with implementations of the present disclosure, irrespective of the user's initial understanding of a desired load magnitude to be sustained.

In some implementations, if load magnitudes are provided at loading locations (two or more locations), the numbers can be used to determine a relative factor between the magnitudes and that relative factor can be used to scale arbitrary magnitudes (e.g., a predefined non-user-specified magnitude used for each location to determine the maximum sustainable load, e.g., as described at 245 of FIG. 2, at FIG. 3B, at 425 of FIG. 4) to determine magnitudes that have the relativeness of the user-provided magnitudes, where those magnitudes can be those that are scaled according to a ratio as discussed in the present disclosure(ratio s as discussed in relation to FIG. 4). The determination of the maximum sustainable load can rely on these scaled magnitudes at these locations for performing the computations for respective versions of the 3D shape as described at operation 245 below for FIG. 2, and at operation 425 of FIG. 4, and throughout this disclosure. In cases, where the load magnitudes that are used are scaled based on the relativeness of those magnitudes as inferred (or directly provided) by user input, the computations of a ratio s can be performed according to the same computational logic but can lead to different number results. However, even if a different ratio s is determined for each location when relativeness is considered (compared to no consideration of relativeness), the result of the maximum sustainable load magnitudes at those locations will not change. However, the relative factor of the magnitudes at the multiple locations can make an impact on the final shape and design of the modeled object.

At 220, a check can be performed to determine whether the boundary condition for the load at a particular location is defined to include a direction. If there is no defined direction for the load as obtained at 210, at least one direction for the load can be assigned at 230. In some implementations, when a direction is not assigned, it can be automatically selected as a direction from one or more directions in a local coordinate system for the surface at the location where load is applied to the preserve geometry. In some cases, the load direction can be selected as the direction of the surface normal of a surface of a preserve body where the load is applied. In some cases, the direction can be defined as a linear combination of directions in a Cartesian coordinate system defined at the surface of the preserve body at which the load is to be applied. In some implementations, the direction can be calculated as a linear combination of surface normals in a region of a predefined size around the location at which the load is to be applied and/or in a region of the preserve body that includes all points in contact with one or more other parts of an assembly. In some implementation, when the direction is not assigned, the direction can be requested to be provided by an internal component of the CAD program or an external component (e.g., external service or application) that can compute and propose a direction for the load at the defined location.

When a direction is determined from the obtained boundary condition(s) or is assigned 230, a generative design process is initiated 240 based on the boundary condition(s) and the shape of the modeled object can be defined by iterative modifications in the design space in accordance with a physical response of the modelled object determined by a numerical simulation. The optimization of the shape of the modeled object can be performed without a stress constraint.

In some implementations, topology optimization is an iterative optimization process where an objective is to minimize material, for example, added or removed material, based on a defined constraint condition. In some cases, manufacturing constraints, or other design criteria, can be obtained for executing the topology optimization. The design criteria can include design objective(s) and design constraint(s) for the object. Design objectives can include but are not limited to minimizing waste material, minimizing weight of the part, minimizing compliance or maximizing stiffness, minimizing stress, and/or minimizing or maximizing other intrinsic properties of the part, and are used to drive the shape synthesis process towards better designs. Though not required, it is typical for a design objective to be rooted in a simulation of the design, e.g., linear static, fluid dynamic, electromagnetic, etc.

Design constraints can include a variety of geometric and physical characteristics or behaviors that should be met in any generated design (requirements either on individual parts or on the entire assembly are also admissible); examples include maximum mass, maximum deflection under load, maximum stress, etc. Different types of constraints can include volume fraction constraints, stress constraints, thickness constraints, displacement constraints, and manufacturing constraints.

In accordance with the present implementations, the numerical simulation that is performed to drive the modifications of the 3D shape at 240 is based on either the specified direction of the load in the obtained boundary condition(s) at 210 or the assigned direction at 230. Further, the numerical simulation does not use a stress constraint and thus, the topology optimization of the shape during the modifications is independent of the load magnitude of the applied load. In some implementations, even if the load magnitude is provided as part of the boundary conditions, such magnitude may be ignored since the topology optimization is based on a linear stress analysis without stress constraints.

Topology optimization takes an initially provided shape along with boundary conditions (or other constraints such as manufacturing constraints and so on) and updates the shape iteratively based on the feedback from structural simulation that is performed on the current shape. Thus, the iteratively modifying 240 is done in accordance with a physical response of the modeled object determined by the numerical simulation.

During the iterative modifications, for each respective version of the modified shape of the modeled object, a maximum sustainable load can be determined 245. Detailed examples of how to determine the maximum sustainable load in each iteration are provided below. The maximum sustainable load can be determined at one or more locations that are identified at 210. In cases where the locations are multiple, the relativeness of the magnitudes at those locations can be considered during the determination of the maximum sustainable loads. In some implementations, the maximum sustainable loads can be determined by scaling a load magnitude used for their computations based on a ratio between the load magnitudes at the two (or more) locations, or if the exact load magnitudes are provided, they can be used as the load magnitudes for the calculations as described below and in relation to FIG. 4. Those load magnitudes, even if used for the computations of the maximum sustainable loads are not constraining the topology optimization and thus do not limit the shape modification and still provide meaningful results and guide the user with accurate maximum sustainable loads determined at the loading locations.

Generative design allows users to choose from a set of modified shape options that are generated. The generated shape options as modeled objects can be used for creating a physical structure using 3D printing or other manufacturing processes such as milling or casting.

The modifications of the 3D shape of the modeled object at 240 can include modifying a geometry of the 3D shape and/or a topology of the 3D shape in the design space in accordance with the physical response of the modeled object determined by the numerical simulation. As used herein, the "geometry" of the 3D shape is the computer-based representation of the individual shape elements being deformed during modification, and the "topology" of the 3D shape is how the shape elements are bounded and connected in the 3D model (modifying the topology involves adding holes or voids to modify the spatial properties of the surface that are unaffected by continuous deformation without tearing, thus changing how shape elements are bounded and connected in the 3D model).

Topology optimization typically leverages FEA techniques in order to perform the necessary shape adjustments at each iteration. Thus, the iteratively modifying 240 can be generally understood as performing FEA numerical simulation, changing the shape and/or topology of the modeled object based on the output of the FEA numerical simulation, and continuing to modify the 3D model for a number of iterations. This is true regardless of the specific design criteria used for the iterative topology optimization process, but typically, the objective used in topology optimization (where the objective is minimized by adding/removing material based on given constraint conditions) is compliance or a form of compliance (like strain energy), and the optimization constraints typically restrict the addition/removal of material and also the regions inside the model where the material can be added or removed. The different types of constraints can be used in topology optimization. For example, the modifications of the 3D shape at 240 can be performed without a stress constraint and can aim at maximizing the stiffness (and minimizing the compliance) of the modeled object that is subject to a volume constraint.

According to the implementations of the present disclosure, generative design users do not need to specify or provide a guess or an estimate, or even an accurate value for the load magnitude, and based on a provided load location by the user (specified part and/or surface of the modeled object) and a direction of the load (either user provided or assigned), based on material properties of a selected material for the modeled object, a multivariate loading process can be implemented to compute a maximum sustainable load for the selected material. The material properties of the selected material can include properties such as yield stress and safety factor. The maximum sustainable load at each iteration can be determined at 245 based on such a multivariate loading process that relies on a load magnitude that is non-user-provided.

In some implementations, the multivariate loading process can rely on approximation of the load magnitude for materials that share material characteristics, such as similar Poisson's ratio. For example, most isotropic materials have a Poisson's ratio v that is around 0.3. Thus, based on such generalization for isotropic materials, computations for multiple different isotropic materials can be performed more efficiently by providing an estimated load magnitude that is accurate enough to inform the user of the expected load magnitude of the generated shape version. The multivariate loading process and the approximation techniques to estimate load magnitude for materials having a substantially close Poisson's ratio are described in further detail in relation to FIG. 4.

In some implementations, resulting versions from iterations during the generative design processing can be provided. At 250, two or more versions of different shapes of the 3D model that are produced during the iterative modification at 240 are provided. The two or more versions can be presented 255 to the user, e.g., in UI 122 on display device 120, along with an option to elect one of the versions of the design. Each iteratively designed shape version is presented at 255 together with a corresponding maximum sustainable load as determined at 245.

At 260, a selection by the user 160 can be received, where the selection is for a version of a modeled shape of the object that is usable in manufacturing a physical structure of the object. The manufacturing can be performed using a computer-controlled manufacturing system, such as an AM or SM manufacturing machine as discussed in connection with FIG. 1.

In some implementations, the user interface presenting the two or more versions of the shape at 255 can provide interactive option(s) to request further iterations over the model before a version is selected at 260. In some implementations, based on a received user selection at 260 for a version of the versions of the shape of the modeled object as generatively designed, the selected version can be provided for use in manufacturing. The providing can include sending or saving the 3D shape version to a storage device or a virtual storage space for use in manufacturing the physical structure corresponding to the object using manufacturing systems.

In some implementations, the providing 250 involve generating 265, e.g., by CAD program(s) 116, a toolpath specification(s) for the computer-controlled manufacturing system(s) for production of a physical structure represented by the 3D model, and manufacturing at least a portion of the physical structure corresponding to the object with the computer-controlled manufacturing system(s) using the toolpath specification(s) generated for the computer-controlled manufacturing system(s).

FIGS. 3A-C show examples of applying boundary conditions to a model. A topology optimization workflow can rely on linear analysis, and especially, on a linear stress analysis without stress constraint(s). When such analysis is linear, increasing the load applied at one or more locations of the 3D model by a scaling factor s will result in an increase in other observable quantities, for example, stresses or displacements by the same amount s. In some implementations, when load is applied at multiple locations (e.g., different loads can be applied for at least two locations of the multiple locations, or a same load can be applied at all of the locations, etc.), a scaling factor s can be used to increase the load at the different locations for a given optimization problem. In some instances, different load magnitudes for respective different locations can be used for performing a topology optimization and determining a result model version, where maximum sustainable load magnitudes for each different location can be determined as discussed throughout the present disclosure. In those cases where load is applied at two or more locations and the load applied at least at two locations is different (e.g., based on information of relativeness between load magnitudes at particular locations, direct load values for different locations), the applied load can be scaled, and a linear effect of the scaling can be provided for the output. For example, if the load is increased by the scaling factor s, observable quantities such as stress, deflection, temperature, critical load, or another quantity depending on the relied upon linear analysis, will increase by the amount of s. The load magnitude is proportional to the yield stress. In addition, the strain energy density, which drives the optimization process, will have the same distribution scaled by a factor of $s^2$, which will result in the same topological distribution of material. Therefore, when performing topology optimization based on boundary conditions that include load cases at particular one or more locations on the preserve geometry of the modeled object where there are no stress constraints, the exact magnitude of the load can be computed or estimated, rather than be used as a user-provided input for guiding or constraining the numerical simulation. Thus, relying only on the load at a location and with a particular direction is sufficient to execute topology optimization and provide useful shape versions that can be provided to users as direct feedback in their design phase and give information for the maximum sustainable load that such a shape can withstand. Indeed, topology optimization in its fundamental form, without stress constraints, aims to maximize stiffness subject to a volume constraint, and thus, it is independent of the load magnitude. The computations for the maximum sustainable load for a shape are dependent on specifics of the material that is to be used for the manufacturing of the object, and thus for one iteratively defined shape version, multiple maximum sustainable loads can be determined that match different materials. In some implementations, materials can share some specifics such as having a substantially similar Poisson's ratio, which can allow computations of the maximum sustainable load of multiple materials to be efficiently executed by using a generalized value for the Poisson's ratio that can be used for performing at least a portion of the computations that can be shared for the set of materials having a similar Poisson's ratio. Such estimations can be based on approximations and not exact calculations for each different material. For materials that have a Poisson ratio that corresponds to a generalized value of Poisson's ratio for isotropic materials, the calculation of the load magnitude would provide an exact value for the load magnitude, rather than an estimated value. For other materials whose Poisson ratio is close but different from the generalized value of the Poisson's ratio used to approximate isotropic materials, the calculated load magnitude can be a good estimate for that magnitude obtained with fewer resources and computationally faster based on the generalization techniques as described in further detail in relation to the description of FIG. 4.

FIG. 3A-C present a user interface where boundary conditions are provided for the generatively designing a model. The user interface includes a user input panel 305 for obtaining the boundary conditions for defining the topology optimization problem. At FIG. 3A, solid bodies 300 are specified to define the design space in which the modelled object will be generatively designed.

A topology optimization workflow can be executed, e.g., by CAD program(s) 116, where the optimization relies on linear stress analysis with no stress constraints. The execution of topology optimization workflow based on the input provided at FIGS. 3A-C can be substantially the same as described in relation to FIGS. 1 and 2, as well as throughout this disclosure. In these examples, a multivariate loading process with minimum user input for the generative design process is used in accordance with the disclosure of the present application to provide versions of a generatively designed shape with respective computed maximum sustainable load.

It can be considered that the user interfaces presented at FIG. 3A-C are a representation of the same user interface window 305 during subsequent steps for a user to provide input to define the topology optimization process. At FIG. 3A, a user, such as user 160 of FIG. 1, can select 307 bodies to constraint, e.g., in all three Cartesian directions. As shown, the user selected one of the bodies, i.e., body 310. FIG. 3B presents the user interface of FIG. 3A after the selection of the constrained bodies from 307 of FIG. 3A and when a subsequent user input is received. The user interface in FIG. 3B presents the user selection for the constrain of the bodies and a further user selection of loads that will be applied to bodies of the design space. As shown in FIG. 3B, the user selects (at user interface field 312) two bodies to be loaded, i.e., 315 and 317. In some implementations, the user input can be provided for only one loading location (not shown), for two load locations, or more. In some implementations, when two or more loading locations are specified, those loading locations can be on separate preserve bodies or on separate surfaces of a single preserve body.

In some implementations, the load applied at the two or more bodies can be of substantially similar load magnitude or of different. In some cases, the load magnitude that is applied at a given location, such as 315 and/or 317, can be provided as an exact amount by the user. For example, such input from the user can be obtained through the user interface, for example, in relation to selecting the user interface field 312. In that example, the selection of bodies to load can result in displaying further user interface elements that allow the user to input the load magnitudes at the selected bodies that are loaded. In some more examples, the input from the user for the load magnitude can be provided in an interactive manner, for example, through user interaction with user elements displayed in relation to the different load locations. In those examples, the user can specify a graphical representation of the load magnitudes for the respective locations without inputting direct magnitude amounts. For example, each location where load is applied can be associated with an arrow that can be adjusted by the user (e.g., with a mouse drag-and-drop operation, through voice command, using other interactive means, pointers, or captured gestures, among other examples). The user may provide input that drags an arrow (e.g., the arrow shown at FIG. 3B) related to a given loaded body to adjust the load magnitude for that loaded body. The arrow size can correspond to a load magnitude defined according to a load magnitude scale (e.g., shown at the user interface) and the user input can adjust the arrow size to define the load magnitude without directly inputting the exact measurement value. In some more examples, the user input provided for load magnitudes at multiple locations can be provided as a relative reference between the different loads at the different locations. In one case, the user can define a relativeness between the loads applied at two or more locations. For example, the user can define a proportion of 1 to 2 for the load magnitude applied at one location compared to another. Other example proportions can be defined by the user to provide input for the relativeness between the amount of load applied at two or more locations.

In some implementations, the distributions of the load at various locations can be defined by the user without explicit input for the proportion or the amount, but through as a user specified graphical representation provided through interactive user interface elements (e.g., such as the arrows shown on FIG. 3 in relation to locations 315 and 317) that can be modified by the user to identify the relativeness between the load magnitudes at different locations. For example, interactive user elements can be provided in relation to each location where load is provided, and the load applied at a given location can be defined according to a visual scale defined for these user elements. The scale can correspond to exact load magnitudes but can also be an arbitrary scale (e.g., between 0 and 1, or 0 and 100) that is to be used for comparison between the different amounts. The scale can be unitless. For example, for each load location, an arrow on a scale between 0 to 1 can be moved based on user interaction, where the provided input for the different load locations can be used to interpret the relativeness between the load magnitudes. If the user had identified that the load magnitude at the location 315 on such a scale is 1 (from a scale of 0 to 1), and the load magnitude at the location 317 is 0.5 (same scale), then it can be interpreted that the loads are with a relativeness 2 to 1 (the load at the first location 315 is two times higher than the load at the second location 317). In some more examples, such relativeness can be obtained by interpreting the relative size of an arrow associated with a given location and an arrow at another location (or more locations), where the arrows' size is adjusted by the user to provide input for the magnitude of the load applied at those locations.

In some implementations, relativeness between the load magnitudes at each load location can be obtained from the user based on obtaining direct load magnitude amounts or through input for the relativeness of the amounts as discussed above. For example, the relativeness input can be provided as a direct quantitative proportion or visually inferred from user interactions with elements on the user interface (e.g., user elements with arrows on a scale, or arrows as shown on FIG. 3B). The obtained information about the relativeness can be used when determining a respective maximum sustainable load at a given location and for a version of the 3D shape during the modification of the shape in accordance with the physical response determined by the numerical simulation as discussed through the present disclosure and for example, at FIG. 2. In some implementations, the provided load magnitudes and/or the relativeness between the load magnitudes at multiple locations can be used to adjust (or scale) a load magnitude that is used to determine a maximum sustainable load for a given location.

In some implementations, the determination of a maximum sustainable load at one or more locations on the preserve geometry can be based on an arbitrary load magnitude. The arbitrary load magnitude can be a non-user-specified load magnitude that is predefined for the maximum load determination or can be a user provided magnitude that is obtained and used for the maximum load determination without constraining the topology optimization. In cases where load is applied at multiple locations and the user had provided either load magnitudes at those locations or relativeness of the load magnitudes at these location as discussed in the present disclosure, the relativeness between the load magnitudes (directly obtained or inferred from the user interactions) can be used to scale the arbitrary load and use a scaled load magnitude for each of the locations to determine the respective maximum sustainable load in accordance with the implementations of the present disclosure. As such, the scaled load magnitudes would be used for the determination of the maximum sustainable load instead of a pre-defined, not-user specified load magnitude (e.g., as described in relation to the iterative modification 420 of FIG. 4).

At FIG. 3C, a subsequent user selection is made (at the user interface field 320) for the obstacle geometries 322, 325, and 330 that are used to define the optimization problem.

In some implementations, based on the input provided at the user interfaces of FIGS. 3A-C, a topology optimization process can be defined and topology optimization can be performed. The topology optimization can rely on an automatically-selected load direction (since the user interface did not require providing such direction) and load magnitude that are both not user selected. In some implementations, the load direction can be assigned as described in relation to FIG. 2 and operation 230. In some instances, even if the direction and the load magnitude are provided, for example, where the user interface of FIGS. 3A-C is extended to include user interface elements requiring such user input, the topology optimization can be executed without taking into consideration user provided input, or as taking into consideration only the load directions without the user provided load magnitude.

As discussed, during design phase, a designer (user 160 of FIG. 1) may not be aware of the exact load magnitude or may enter a load magnitude by error or as a random guess. If the topology optimization is executed to rely on such load magnitude to constrain the topology optimization, the accuracy of the generative design process will be reduced and non-usable models could be generated. Such example downsides from relying on user provided load magnitude to guide the generative design are further discussed in relation to FIGS. 6A-C below.

The provided input from the user through the user interface selections as described at FIGS. 3A-C can be used to perform the topology optimization and generate design results during the iterations of the modifications of the shape of the 3D modelled object in accordance with implementations of the present disclosure. The generated output can be provided together with information for the user about the maximum sustainable load that each of the preserves can withstand for each topology optimization iteration. The maximum load that can be withstood by the loaded bodies can be computed based on computations at the CAD program as described in relation to FIG. 2 and FIG. 4. The maximum sustainable load can be determined based on performing a multivariate loading process to apply an arbitrarily defined load and determine a scaling factor that can be applied to adjust an arbitrability used load magnitude to define the maximum sustainable load that the body can withstand. The topology optimization as executed is not dependent on the load magnitude as it is done without stress constraints, and thus the maximum sustainable load for a version of the shape can be computed based on the multivariate loading process where a not-user-specified load magnitude can be used to determine the maximum sustainable load that the respective shape can withstand.

The multivariate loading process relies in general on the understanding that if an external loading is applied to a body, and the external loading is scaled by a factor of 100, the maximum von Mises stress is scaled by the same factor of 100. Therefore, for a given load direction, a load magnitude as an input value may not be necessary to be provided as an input to guide the topology optimization. Rather, a load magnitude can be used as input for computations that can allow to determine a maximum load magnitude that can be sustained by a body. Such load magnitude that can be used does not have to be a user provided load magnitude nor a magnitude that is defined as a maximum sustainable load for a part to constrain the topology optimization. Thus, it is not necessary that a user provides a definition of the load magnitude to specify a topology optimization problem as defined at FIGS. 3A-C and as executed for example as described in FIGS. 2, 4 and 7.

In some implementation, a magnitude value can be selected randomly or based on a predetermined configuration, e.g., a default value configuration, where such magnitude can be scaled based on a computed scaling factor determined as a ratio between an allowable stress value and a maximum allowable stress level, e.g., maximum elemental von Mises stress. The computations for determining a maximum sustainable load can be based on applying the scaling factor to the used load magnitude.

In some implementations, a load magnitude that is not user specified for the problem is used to compute, for a respective material, the maximum allowable stress $\sigma_{max}$ nd the allowable stress $\sigma_{allowable}$ value as yield stress by the modeled object, where the ratio s as defined below:

$$s = \frac{\sigma_{allowable}}{\sigma_{\max}}$$

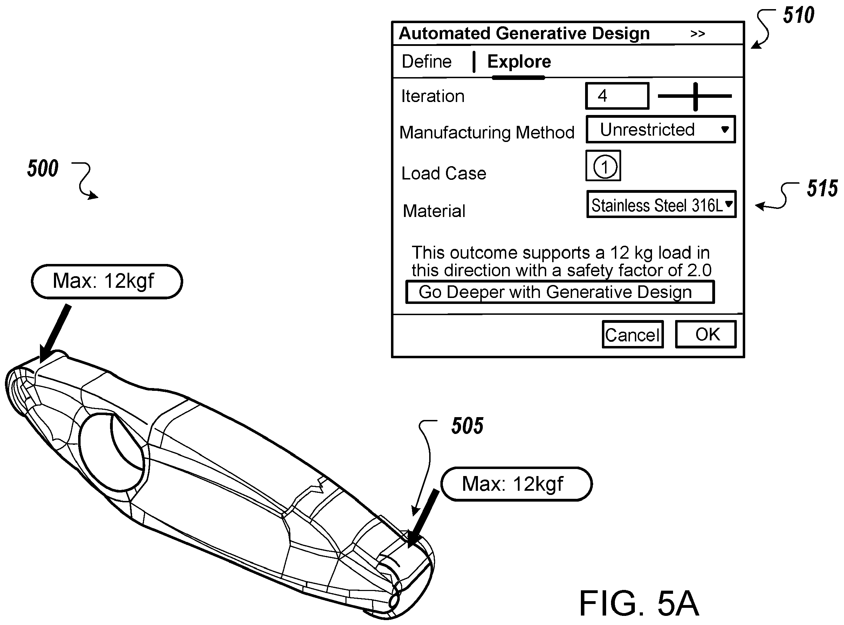

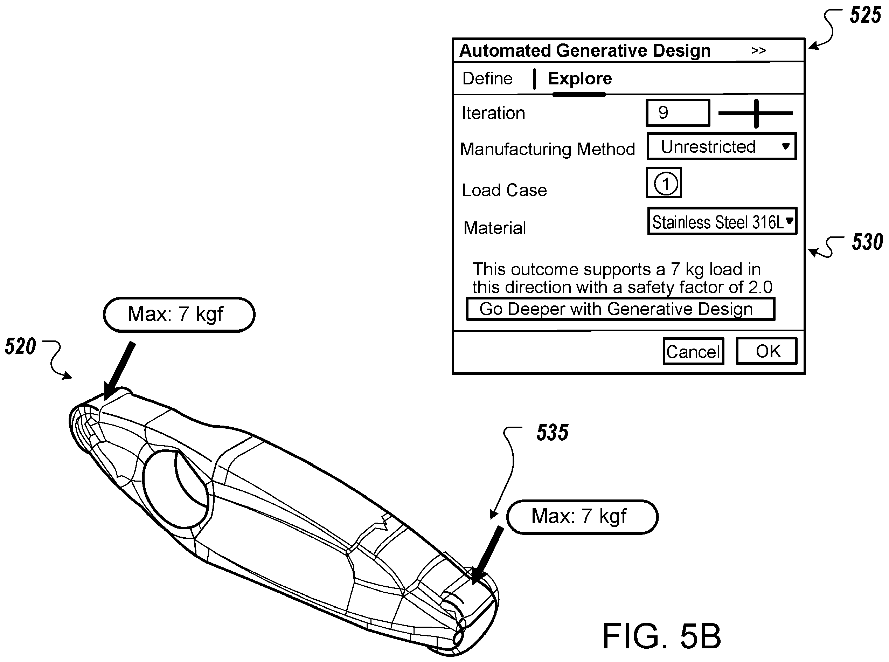

This can be applied to the used load magnitude to scale that not user specified load magnitude and inform the user about the maximum sustainable load that the object at the load location can sustain. The computation of the ratio that can be used to determine the maximum sustainable load can be performed as described in relation to FIGS. 4, 5A, and 5B.

FIG. 4 shows an example of iteratively modifying a 3D shape of a modeled object and informing the user of a maximum sustainable load of versions of the modeled shape based on a multivariate loading process.

At 410, a design space and design criteria are obtained. The design criteria include boundary condition(s) defining a location on a surface of at least a portion of the modeled object, where load is to be applied. The load can be defined with or without a load direction. The load magnitude does not have to be specified and even may not be requested as input for the iterative modification of the shape of the modeled object. The obtaining 410 can be performed as described in relation to FIG. 2 and through the user interfaces of FIGS. 3A-C.

In some implementations and as discussed in relation to FIG. 2 and 3B, multiple loading locations can be provided on a single or multiple surfaces of a preserve body or separate bodies of the modeled object. The loading locations can be provided with user input for the load magnitudes, where the load magnitudes can be input as direct absolute numbers or as relative numbers or visual representation of relativeness between the magnitudes (e.g., as discussed in relation to FIG. 3B and for example with arrows of different size or as direct ratio input such as 1 to 2). In some implementations, the load magnitudes at the multiple locations can be used as predefined, not-user-specified load magnitude(s) at operation 425 to determine the maximum sustainable load. In some implementations, an arbitrary load can be applied non-uniformly at multiple locations (e.g., based on relative magnitude information such as through explicit user input about the ratio or direct load values) and at operation 425, a distribution of load magnitudes at the different locations can be determined to correspond to the relativeness inferred from information about the non-uniform distribution (e.g., as direct values, as visual representation of relativeness, or as direct ratio). If user-provided relativeness input for the load magnitudes at multiple locations is included as a consideration for the iterative modification of the 3D shape, the final shape and geometry of the modeled object would be affected. However, the general conceptual loading applied at the location to determine a ratio as described at 425 need not change and can be applied for determining corresponding maximum sustainable loads in cases where the load is distributed in a uniform and non-uniform manner. If different load magnitude values are used for the conceptual loading to determine maximum sustainable loads, the computations for the ratio would result in different ratio values but the resulting maximum sustainable loads would stay unchanged.

For example, if a model includes two locations where load is provided and the load has a relative magnitude of 1 to 2 between the two locations, an arbitrary load (be that user provided or non-user provided, set by default, empirically determined, or something else) can be scaled and distributed to the two locations. When a linear analysis is performed for a given topology optimization problem, a ratio as described in 425 can be determined. For example, if the loads at the two locations are 1.0 and 2.0, a ratio of 1:2 can be set, and by comparing the maximum stress in the simulation result with the yield stress of the material, a result maximum sustainable load can be determined that would be 3.5 kilogram force (kgf) for the first location and 7 kgf for the second location.

At 420, the 3D shape of the modeled object is iteratively modified at a design program such as the CAD program 116 of FIG. 1. The iterative modification is performed based on the design space and the load location as obtained at 410. The modification can be performed in a substantially similar manner as discussed in relation to FIG. 2 and FIGS. 3A-C. Even if the load direction and/or the load magnitude are obtained at 410, the modification does not have to be performed based on those obtained conditions.

In some implementations, if there is a direction provided for the load, that direction can be used for the iterative modification. If the load direction and/or load magnitude are not provided, the load direction can be assigned by the CAD program and the load magnitude can be determined according to multivariate load principles implemented at the CAD program in accordance with implementations of the present disclosure.

The iterative modification 420 relies on a topology optimization process based on linear physics. As noted above, topology optimization in its fundamental form, without stress constraints, aims to maximize stiffness of the modeled object that is subject to a volume constraint, and thus, it is independent of the load magnitude. During the topology optimization, a volume fraction constraint sets a limit on the amount of material that can be removed from the model, and one or more volume fraction constraints can be used in various implementations, including potentially volume fraction constraint(s) specified by a user.

In accordance with the implementations of the present disclosure, users who request to generatively design a shape of a model, do not need to specify or provide a load magnitude for the topology optimization to provide working results. Indeed, with the present implementations, based on the material properties of a material that is to be used for manufacturing the object such as yield stress and safety factor, a multivariate loading process can be executed to determine and inform the user what the maximum allowable load for a given material is.

The multivariate loading process can be executed as a series of operations that include computing a scaling factor s, at 425, that can be used as a ratio to scale an arbitrary load magnitude used for the sake of the multivariate loading and determining a maximum sustainable load for each iteration of the iterative modification during the optimization.

At 425, at a given iteration of the generative design 420, a ratio between an allowable stress limit for the modeled object and maximum stress experienced by the modeled object is obtained to be used to determine a maximum sustainable load for the object. At 430, at this given iteration a version of the shape of the modeled object is generated and a maximum sustainable load for that version is provided, for example, at a user interface. The maximum sustainable load as provided at 430 is computed based on the ratio obtained at 425.

The ratio can be computed according to the below steps and considerations. As computed, the ratio can be applied to a predefined, non-user specified load magnitude, that is used for the multivariate loading as an applied load, to determine the sustainable maximum load for a respective version of the iteratively modified 3D shape of the modelled object.

In a typical FEA discretization, the nodal load does not vary during optimization iteration steps with the exception of body load such as gravity. If nodal displacements are known, elemental strain and stress can be computed.

The vector of the nodal load can be computed according to formula

$$(1) \qquad K\underline{U} = \underline{F},$$

where $K$ is the global stiffness matrix and $\underline{U}$ is the nodal vector of displacements.

Once the nodal displacements are known, the elemental strains $\underline{\varepsilon}$ and stresses $\underline{\sigma}$ can be determined based on the below formulas (2) and (3):

$$(2) \qquad \underline{\varepsilon} = B\underline{u}$$

$$(3) \qquad \underline{\sigma} = C\underline{\varepsilon}$$

where $\underline{u}$ are the elemental displacements, $B$ is the strain interpolation, and C is the material stiffness matrix.

Based on the linear equations (1), (2), and (3), if the external loads F are scaled by a factor s, the nodal displacements $\underline{U}$ will be scaled by the same amount, and so will the elemental strains $\underline{\varepsilon}$ and stresses $\underline{\sigma}$.

**Step 1:**

As a first part of the multivariate loading process is a computation steps of the global stiffness matrix $K$ for the material that is selected for the manufacturing of the object. The global stiffness matrix $K$, as shown in formula (1), is a function of a current shape at a particular shape modification iteration, the Young's modulus E and Poisson's ratio v.

$$(4) \qquad K = Ef(V)$$

V is a matrix that is solely a function of the Poisson's ratio v, where v has a value dependent on the material used. The function $f$ depends on $V$ and the current shape.

For isotropic materials, the material matrix $C$ is directly proportional to the Young's modulus $E$, where $C = EV$, and where $V$ is a matrix that is solely a function of the Poisson's ratio v. Since for isotropic materials v is around 0.3, the material matrix and global stiffness matrix with v = 0.3 can be computed, and it can be used to calculate the scaling factor s that can be applied to a wide range of isotropic materials with different allowable maximum stresses. In some implementations, if the topology optimization process is not defined with reference to displacement values, the process can leverage any value for a Young's modulus for better stiffness matrix conditioning that can increase the speed and efficiency of the calculations. The stresses will be independent of this value that is chosen for the Young' modulus. For any given material, the information that is needed would be the maximum allowable stress since the stress depends on the material. For example, stronger material has larger maximum allowable stress amounts.

For isotropic materials, the v value can be generalized to a value of 0.3, and computations based on v=0.3 can be used as a generalization (or approximation) that is applicable to isotropic materials that have a close v value. Thus, in some implementations, if v=0.3 is used for a first computation of $f$, multiple isotropic materials can be approximated based on that single computation.

**Step 2:**

A global load vector F can be defined using any magnitude. For example, the CAD program can define a default magnitude to be used, it can be randomly selected, or other definition of the load magnitude can be selected for the multivariate loading process and to determine the maximum sustainable load at the load location.

**Step 3:**

As a subsequent operation, the global displacement vector $\underline{U}$ can be solved, where the actual maximum sustainable load can be presented as the load magnitude defined at Step 2 multiplied by the scaling factor s, as presented in formula (5). Since the magnitude of $\underline{F}$ is arbitrary, it can be scaled by the scaling factor s and the formula (1) can be presented as (5):

$$(5) \qquad K\underline{U} = s\underline{F}$$

Based on (5), he global displacements U can be written as formula (6):

$$(6) \qquad \underline{U} = \frac{s}{E}f^{-1}(V)\underline{F}$$

Step 4:

The elemental strains $\underline{\varepsilon}$ can be computed as it is a function of the elemental displacement as shown in (6) and the strain interpolation B. Based on step 3, the elemental strains $\underline{\varepsilon}$ from (2) can be rewritten as (7):

$$(7) \qquad \underline{\varepsilon} = B\underline{u} = \frac{s}{E} Bg(V, \underline{F}),$$

where $g$ is a function of V and F.

**Step 5:**

The elemental stresses $\underline{\sigma}$ as defined with formula (3) above can be rewritten based on the results from step 4 and computed as equation (8):

$$(8) \quad \underline{\sigma} = C\underline{\varepsilon} = EV\underline{\varepsilon} = sBh(V, \underline{F}),$$

where $h$ is a function of $V$ and $\underline{F}$. The elemental stresses $\underline{\sigma}$ are independent of the Young's modulus E and directly proportional to the scaling factor s.

**Step 6:**

The scaling factor s can be computed as the ratio between yield stress as an allowable stress value $\sigma_{allowable}$ and the maximum elemental von Mises stress $\sigma_{max}$ calculated based on (8).

$$(8) \qquad s = \frac{\sigma_{allowable}}{\sigma_{\max}}$$

The Steps 1-5 can be computed once for a value of 0.3 for the Poisson ratio as an approximated value for isotropic materials, and thus the calculation of the scaling factor can rely on the precomputed stress for the selected v value (for example, v=0.3 that can approximate the behavior of isotropic materials), where any value for the Young's modulus E can be used. Any value E can be used since the scaling factor is independent of this value.

Based on the multivariate loading process and the steps as outlined above, a ratio s can be obtained for an approximation for isotropic materials. In some implementations, the multivariate loading process can be implemented at an external component or invoked as a cloud service running outside of the CAD program executing the topology optimization.

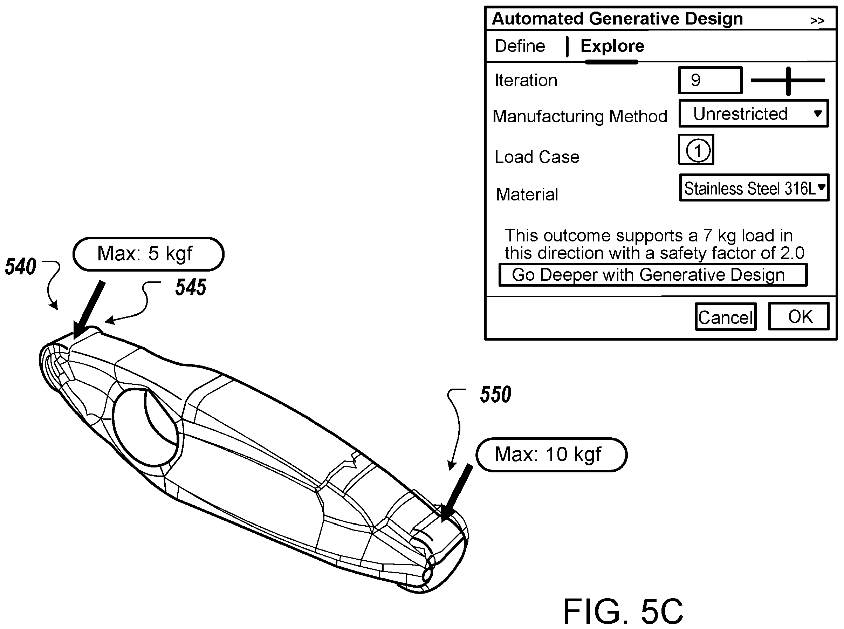

At 430, a set of versions of the modeled object are generated, and at 440, a respective shape version can be presented at a user interface of a display device, where the shape is presented with a respective computed maximum sustainable load. The presentation of a version can be substantially similar to the presented version at either FIG. 5A, FIG. 5B, or FIG. 5C, as described in detail below. Further, in some implementations, rather than provide 440 versions of the modeled object that are a final generated 430 model plus one or more intermediate models generated 430 during a single shape and/or topology optimization loop, the versions of the modeled object that are generated 430 for presentation 440 can be output results from respective shape and/or topology optimization loops run in sequence.

In some implementations, a single volume fraction constraint, which can be hard coded in the algorithm and/or user specified, can be used in a series of optimization loops. In the series, a first optimization loop generates 430 a first version of the model for presentation 440, and then one or more subsequent optimization loops generate 430 one or more additional versions of the model for presentation 440, with the prior model version being used as the initial design space for the subsequent optimization loop. Thus, for example, with a volume fraction constraint of 50%, each version of the model will be at most a 50% reduction in the total volume of the input design space. In some implementations, more than one volume fraction constraint value can be used in the series of optimization loops. For example, a volume fraction constraint of 50% can be used with the initial design space to produce a first version of the model, and then a volume fraction constraint of 10% can be used, with the input design space being the first version of the model, to generate a second version of the model. In general, various volume fraction constraints can be used over two or more shape and/or topology optimization loops, each loop run until convergence, to generate two or more versions of the model.

FIGS. 5A and 5B show examples of two versions 500 and 520 of a modelled object generated during a generative design process based on obtained design space and boundary conditions as defined through the user interface of FIGS. 3A-C and based on modifications performed according to the implementations of the present disclosure. FIGS. 5A and 5B show example versions of modified shapes during a topology optimization process as defined through the user interactions discussed in relation to FIGS. 3A-C.

The topology optimization is executed by using a load direction (e.g., either automatically-selected load direction or user selected direction) and a magnitude (that is not a user-provided magnitude). The optimization that executes the generative design process can inform the user of the maximum sustainable load that each of the model versions can withstand at locations on the preserve bodies for each iteration. For example, FIG. 5A shows a version generated at iteration 4, FIG. 5B shows a version generated at iteration 9, and FIG. 5C shows a version generated at iteration 9 if the load applies at the two locations 545 and 550 was distributed non-uniformly.

At FIG. 5A, the user interface includes the version 500 of the shape that is defined at iteration 4, and a user toolbox 510 that includes information for the executed topology optimization that presents information about the iterative step number, the manufacturing method constraints, the number of load cases defined, the material that is used for the numerical simulation, as well as information 515 about the maximum sustainable load that can be withstand at the load location 505, as well as a safety factor. In this case, at location 505, the maximum load magnitude that can be sustained by the object is 12 kgf.

At FIG. 5B, the user interface includes the version 520 of the shape that is defined at iteration 9. The user interface includes a user toolbox 525 that includes information for the executed topology optimization including the iterative step number, the manufacturing method constraints, the number of load cases defined, the material that is used for the numerical simulation, as well as information 530 about the maximum sustainable load at the load location, as well as a safety factor. In this case, at location 535, the maximum sustainable load that can be sustained by the object is 7 kgf.

As shown, the load distribution between the two locations at FIGS. 5A and 5B is even and the user interface provides a reporting of the maximum sustainable load for each of those locations where load is applied.

At FIG. 5C, the user interface includes the version 540 of the shape that is defined at iteration 9. FIG. 5 C is an example of modification performed for an object that is similar or substantially similar to the object of FIG. 5B but in the example of FIG. 5C the user specified (directly or quantitatively) a ratio of relativeness between the loads applied at the two locations. In both FIG. 5B and 5C, the same material is considered for the numerical simulation. In the example of FIG. 5C, the load applied at the object is at two locations, where the load is not distributed uniformly, and higher load is applied at location 550 rather than at location 545. In this example, the ratio that is defined is 1:2 between the two loads. In those cases, the determination of the maximum sustainable load is performed with consideration of the relativeness between the loads at the two locations and the load magnitudes at those two locations is computed in a similar manner to the computations done for a model having only one or multiple locations where load is applied equally. The shape presented at FIG. 5C is optimized differently compared to the optimization performed in the example of FIG. 5B where the loads were distributed evenly. This differently optimized shape results from the difference in the applied load at the different locations (i.e., 1:2 relativeness). The output model as shown on FIG. 5C presents a different maximum sustainable load magnitude applied in each of the load locations based on the 1:2 ratio specified.

The versions generated at these iterations can be provided with the information about the maximum sustainable load based on the multivariate load processing as discussed throughout this disclosure and for example in relation to FIGS. 2, 3, and 4.

The user interfaces as shown on FIGS. 5A and 5B, can be presented at two subsequent user screens, as part of one display screen (e.g., one below the other), in a carousel mode where different version that can be scrolled based on a user interaction (e.g., click of a button, voice command, touch command, swiping, etc.), or other way of presentation on the user screen.

In some implementations, the user can select a different material or multiple materials as options for the generative design and the computer program (e.g., CAD program) can provide the maximum loading conditions for the different material option. In some instances, the provided maximum loading conditions can be provided without the need to recompute the solution, as discussed in FIG. 4, but rather can rely on at least a portion of the computations from the multivariate loading. In the case of alternatives of materials that share a material characteristic such as the isotropic materials having a Poisson's ratio that is on average 0.3, the maximum sustainable load for another isotropic material can be provided as an estimate close to the expected maximum loading conditions based on similarity of material properties of isometric materials.

FIGS. 6A-C show examples of defining and executing a topology optimization based on specified non-physical loading conditions provided by a user for iteratively modifying the shape of a 3D model.

When a generative design process is initiated and load cases are defined as boundary constraints, if the loads are defined with their location, direction, and magnitude, and the computations for the generative design rely on those provided properties, it may be possible that those are non-physical loading conditions. In some examples, this can be done by a user who is a novice designer, this can be a typographical error, oversights, or something else. In any of those cases, if the load magnitude is defined in a non-physical way (e.g., a load magnitude that is excessive), the generative design results can be a frustrating experience for the requesting user as those results may be completely unusable.

In FIG. 6A, a generative design setup 600 is defined at a structural load user menu 620 including load locations, respective load directions, as well as load magnitude. The load case as defined at user menu 620 includes a load magnitude 615 that defines a load of 50k Newton (N) on each preserve geometry. In the particular case, such load magnitude can be considered as a non-physical condition that is excessive loading for the modeled object. The user input as provided at 620 for the load case can be used to trigger a topology optimization for the shape of the modeled object, where one or more materials can be considered. For example, two materials can be provided as input for the optimization - steel and aluminum.

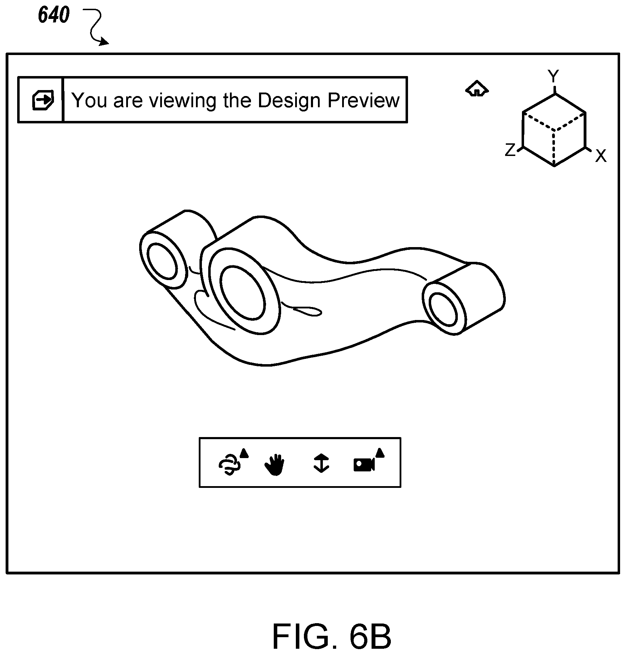

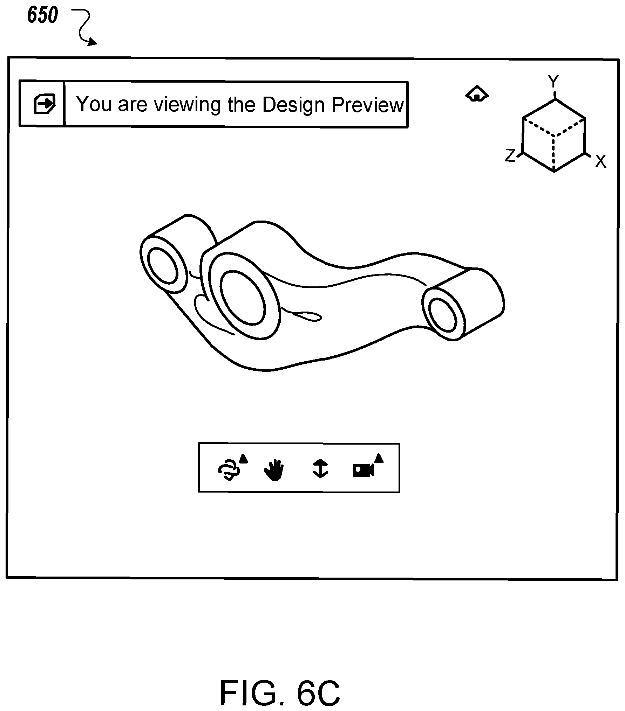

Based on executing generative design modifications according to the boundary condition(s) as defined at user menu 620 of FIG. 6A, iteratively modified versions of the shape of the modeled object can be output. FIG. 6B includes a generative design output 640 from the defined topology optimization problem at 620 of FIG. 6A that is provided for a modeled object to be manufactured from steel. FIG. 6C includes a generative design output 650 from the defined topology optimization problem at 620 of FIG. 6A that is provided for a modeled object to be manufactured from aluminum.

Because the loading conditions were excessive conditions but still used during the iterative modification, the produced outcomes 640 and 650 for each material (as shown in FIGS. 6B and 6C) may be not usable because the optimization process would stop earlier due to being unable to satisfy the stress constraint. The minimal factor of safety is below the user-specified limits with such a high load magnitude (50k N) and thus the optimization is prompted to stop earlier. In some implementations, when such a non-working output/result is provided to the user, the user can evaluate the output and consider how to redefine the optimization process to a load that correspond to an accurate load magnitude and iteratively modify the shape by a re-run of the optimization process. However, this is associated with higher computational costs, inefficiency, delay in time for the execution of the results, and poor user experience.

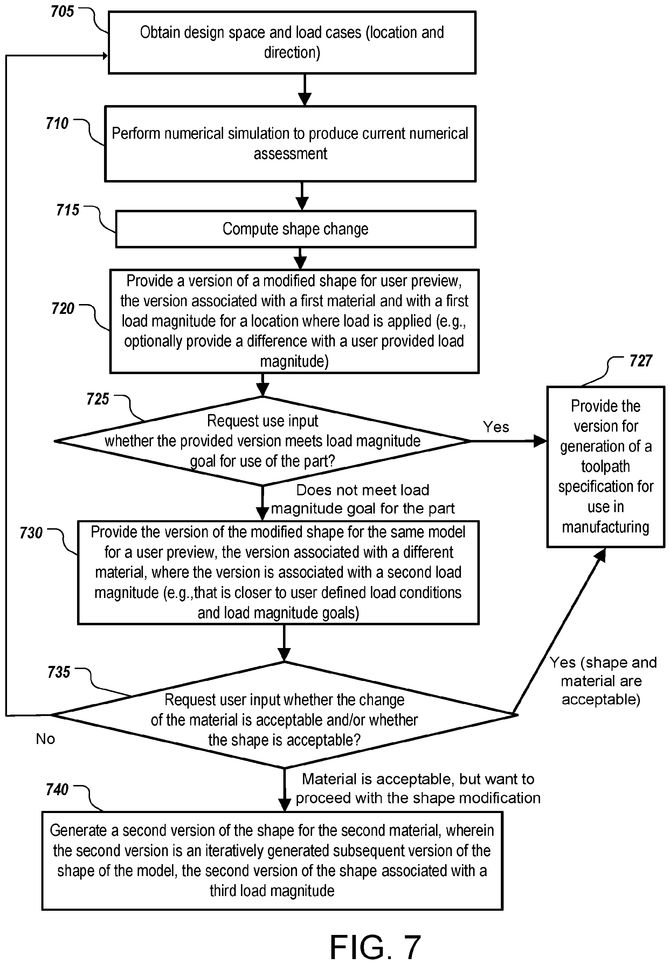

FIG. 7 shows an example of iteratively designing a 3D shape of a modeled object based on iterative guidance of the modifications of the model based on user input and iteratively providing sustainable load of the modified shape version. In some implementations, the iterative modification of the 3D shape can be executed in substantially similar manner as discuss in relation to FIGS. 2 and 4, and the program can output generatively designed versions to interact with the user and generate a final version that is desired by the user and usable for generating a toolpath specification usable for instructing a manufacturing machine to manufacture a physical structure according to the modeled shape.

At 705, a design space and design criteria including load cases are obtained to define a topology optimization problem. The obtaining 740 can be substantially similar to the obtaining 210 operation of FIG. 2 and the 410 of FIG. 4.

At 710, a numerical simulation is performed to produce a current numerical assessment that is used to guide the modification of the shape of the modelled object during the topology optimization. The numerical simulation is performed by using either a specified direction by the user as part of the obtained load cases or an assigned direction for the load at the location.

At 715, the shape changes are computed iteratively and a version of a modified shape is provided for a user preview at 720. For example, the provided version can be for example such as the versions presented at FIGS. 5A, 5B, and 5C. In yet another example, the provided version can be such as one of the provided versions of operation 240 of FIG. 2 or the presented shape at 440 of FIG. 4. The provided version can be presented for preview for a user and a first load magnitude that is a maximum load magnitude that can be withstand by the part at the local when associated with a first material can be presented. The provided version at 720 can identify the maximum sustainable load at the locations where load is applied in a similar way as presented at FIGS. 5A-B. Such maximum sustainable load can be computed and provided as described throughout the present disclosure and can rely on the multivariate loading process discussed through the present disclosure and for example in relation to FIGS. 2 and 4. In some implementations, the user can be also provided with an indication of a difference between the first maximum sustainable load for the version and the user provided maximum load.

At 725, user input is requested to determine whether the provided version meets load conditions for use of the part. For example, if the part is expected to withstand a load of 12 kgf, and the version at iteration K as provided at 720 is associated with a maximum sustainable load magnitude of 15 kgf, then a user input can be provided to identify that the version of the modified shape does meet the load conditions for use of the part.

If at 725, the user input identifies that the provided version meets the user goals for the load magnitude and the generated shape, at 727, the version can be selected and provided for generation of a toolpath specification for use in manufacturing (e.g., similar to step 265 of FIG. 2).

If the user input at 725 identifies that the load conditions are not met, a new display of the version of the modified shape can be provided for user preview where the new display can be associated with a different material and associated with a second load magnitude as a second maximum sustainable load magnitude by the shape version. For example, the provided second material can be selected as an alternative of the first material that withstands a load that is closer to a user load magnitude goal (e.g., in the case that at 725 the user provides a desired load magnitude to be sustained by the part or it is provided at an earlier step). In some instances, the different material can be selected based on user provided input for multiple materials relevant to the object or can be determined as a good candidate for an alternative material that can lead to a load magnitude that is closer to the user defined load conditions (e.g., if provided at 705, 725, or elsewhere). In some instances, the user input that is requested at 725 can include a request to provide the load magnitude to be used for reference when generatively designing the part without stress constraints. For example, an expectation of load of at least 12 kgf can be provided at 705 that can be used at 730 to determine which could be a second material that can be provided.

In some implementations, the first material that is associated with the version at 720 can be an isotropic material and a selection of another isotropic material that has a maximum sustainable load magnitude closer to a user provided magnitude expectation can be performed efficiently and fast based on the multivariate loading process and approximation for isotropic materials as discussed in relation to FIG. 4.

At 735, user input can be requested again to determine whether the change of the material is acceptable and/or whether the shape version is acceptable. If the shape and the material are acceptable (together with the information about the maximum sustainable load magnitude), the shape can be provided for generation of a toolpath specification at 727. If the change of the material is acceptable (e.g., this is an acceptable alternative of a material), but the user still wants to continue with the generative design process, a second version of the shape can be generated for the second material at 740. The second version is an iteratively generated subsequent version of the shape of the model that has a computed maximum sustainable load magnitude that is a third load magnitude (i.e., computed according to the multivariate loading process described herein). The generated second version can be provided to the user, for example, as described in relation to the providing step 240 of FIG. 2, where the second version is displayed on a user interface, and the user can select it for use in manufacturing a part based on a toolpath specification generated according to the third shape version of the 3D model. If the change of the material, the shape and the determined maximum sustainable load magnitude are not acceptable for the user at 735, the user may redefine the process at 705, for example, by providing a set of materials that are acceptable, by defining a load magnitude as a relevant reference point. Such additional input for the problem at 705 can be used to reuse the previous computations and provide a new version at 740 taking into consideration the user input. Alternatively, the user can redefine the generative design process and execute the process as a new topology optimization problem.

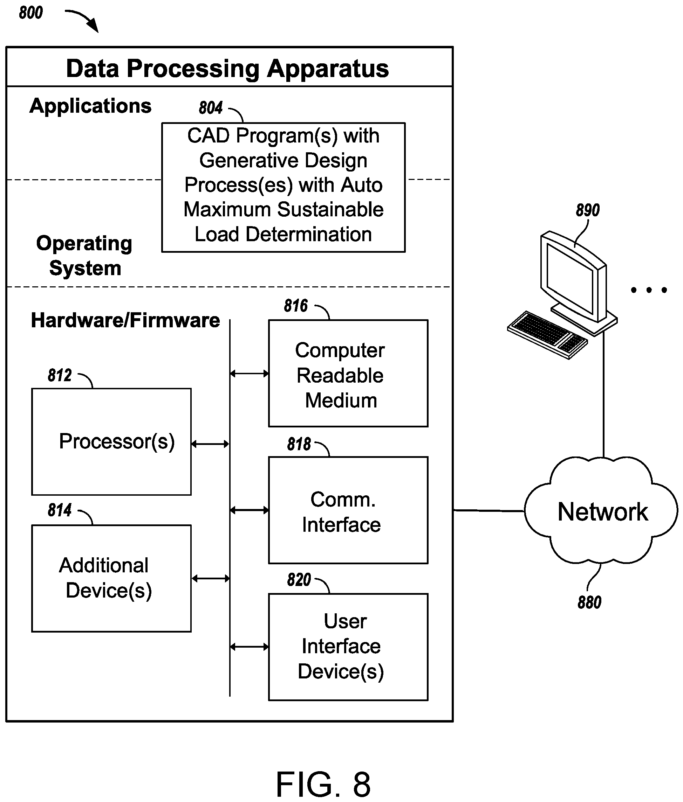

FIG. 8 is a schematic diagram of a data processing system including a data processing apparatus 800, which can be programmed as a client or as a server to implement the embodiments described in this specification. The data processing apparatus 800 is connected with one or more computers 890 through a network 880. While only one computer is shown in FIG. 8 as the data processing apparatus 800, multiple computers can be used. The data processing apparatus 800 includes various software modules, which can be distributed between an applications layer and an operating system. These can include executable and/or interpretable software programs or libraries, including tools and services of one or more 3D modeling programs 804 that implement the systems and techniques described above. Thus, the 3D modeling program(s) 804 can be CAD program(s) 804 (such as CAD program(s) 116) that define the boundary conditions (one or more loading conditions and/or one or more displacement constraints) to be applied during generative design, and that can implement one or more generative design processes (e.g., using SIMP based method(s) for generative design) for topology optimization and physical numerical simulation operations (finite element analysis (FEA) or other) using the boundary conditions application, as defined by the 3D modeling program(s) 804. The 3D modeling program(s) 804 can enable specification of the boundary conditions using one or more surfaces of preserve bodies of the modeled object. The 3D modeling program(s) 804 can implement logic to automatically determine a maximum sustainable load for iteratively modified versions of a shape during the optimization, which is determined based on a not-user-specified load magnitude as described in relation to FIGS. 2, 3, 4, and 5. The 3D modeling program(s) 804 can implement the multivariate loading process as described in the present application, for example, in relation to the description of FIG. 4.

The program(s) 804 can also potentially implement manufacturing control operations (e.g., generating and/or applying toolpath specifications to effect manufacturing of designed objects). The number of software modules used can vary from one implementation to another. Moreover, the software modules can be distributed on one or more data processing apparatus connected by one or more computer networks or other suitable communication networks.

The data processing apparatus 800 also includes hardware or firmware devices including one or more processors 812, one or more additional devices 814, a computer readable medium 816, a communication interface 818, and one or more user interface devices 820. Each processor 812 is capable of processing instructions for execution within the data processing apparatus 800. In some implementations, the processor 812 is a single or multi-threaded processor. Each processor 812 is capable of processing instructions stored on the computer readable medium 816 or on a storage device such as one of the additional devices 814. The data processing apparatus 800 uses the communication interface 818 to communicate with one or more computers 890, for example, over the network 880. Examples of user interface devices 820 include a display, a camera, a speaker, a microphone, a tactile feedback device, a keyboard, a mouse, and VR and/or AR equipment. The data processing apparatus 800 can store instructions that implement operations associated with the program(s) described above, for example, on the computer readable medium 816 or one or more additional devices 814, for example, one or more of a hard disk device, an optical disk device, a tape device, and a solid state memory device.

Embodiments of the subject matter and the functional operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented using one or more modules of computer program instructions encoded on a non-transitory computer-readable medium for execution by, or to control the operation of, data processing apparatus. The computer-readable medium can be a manufactured product, such as hard drive in a computer system or an optical disc sold through retail channels, or an embedded system. The computer-readable medium can be acquired separately and later encoded with the one or more modules of computer program instructions, e.g., after delivery of the one or more modules of computer program instructions over a wired or wireless network. The computer-readable medium can be a machine-readable storage device, a machine-readable storage substrate, a memory device, or a combination of one or more of them.

The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, a runtime environment, or a combination of one or more of them. In addition, the apparatus can employ various different computing model infrastructures, such as web services, distributed computing and grid computing infrastructures.

A computer program (also known as a program, software, software application, script, or code) can be written in any suitable form of programming language, including compiled or interpreted languages, declarative or procedural languages, and it can be deployed in any suitable form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM (Erasable Programmable Read-Only Memory), EEPROM (Electrically Erasable Programmable Read-Only Memory), and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., an LCD (liquid crystal display) display device, an OLED (organic light emitting diode) display device, or another monitor, for displaying information to the user, and a keyboard and a pointing device, e.g., a mouse or a trackball, by which the user can provide input to the computer. Other kinds of devices can be used to provide for interaction with a user as well; for example, feedback provided to the user can be any suitable form of sensory feedback, e.g., visual feedback, auditory feedback, or tactile feedback; and input from the user can be received in any suitable form, including acoustic, speech, or tactile input.

The computing system can include clients and servers. A client and server are generally remote from each other and typically interact through a communication network. The relationship of client and server arises by virtue of computer programs running on the respective computers and having a client-server relationship to each other. Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a browser user interface through which a user can interact with an implementation of the subject matter described is this specification, or any combination of one or more such back-end, middleware, or front-end components. The components of the system can be interconnected by any suitable form or medium of digital data communication, e.g., a communication network. Examples of communication networks include a local area network ("LAN") and a wide area network ("WAN"), an internetwork (e.g., the Internet), and peer-to-peer networks (e.g., ad hoc peer-to-peer networks).

While this specification contains many implementation details, these should not be construed as limitations on the scope of what is being or may be claimed, but rather as descriptions of features specific to particular embodiments of the disclosed subject matter. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the invention have been described. Other embodiments are within the scope of the following claims. For example, while the focus of the detailed description is on topology optimization, the described systems and techniques are applicable to shape optimization generally.

Examples

Although the present application is defined in the attached claims, it should be understood that the present invention can also (additionally or alternatively) be defined in accordance with the following examples:

Example 1: A method comprising:

obtaining a design space for a modeled object and one or more boundary conditions for numerical simulation that employs a linear analysis, wherein the modeled object corresponds to a physical structure and comprises a preserve geometry, and wherein the one or more boundary conditions comprise a location on the preserve geometry at which a load is to be applied;

checking whether the one or more boundary conditions include a specified direction for the load at the location;

assigning at least one direction for the load at the location when no specified direction is included in the one or more boundary conditions;

iteratively modifying a three dimensional shape of the modeled object in the design space in accordance with a physical response of the modeled object determined by the numerical simulation performed using either the specified direction or the at least one direction for the load at the location, wherein the iterative modification comprises determining a respective maximum sustainable load for each of two or more versions of the modified three dimensional shape, wherein the maximum sustainable load is determined based on a predefined, not-user-specified load magnitude for the load at the location;

presenting to a user the two or more versions of the modeled object having different shapes produced by the iteratively modifying of the three dimensional shape, including presenting the respective maximum sustainable load for each of the two or more versions of the modeled object; and

receiving a user selection of one of the two or more versions of the modeled object, wherein the two or more versions are useable in manufacturing the physical structure using one or more computer-controlled manufacturing systems.

Example 2: The method of Example 1, wherein the iteratively modifying comprises iteratively generating the two or more versions of the three dimensional shape without use of a stress constraint, wherein the linear analysis is linear stress analysis, wherein each version of the two or more versions when associated with a first material is determined to withstand a corresponding first maximum sustainable load that is different from a corresponding second maximum sustainable load that is determined for the same version of the modeled object when associated with a second, different material, and wherein both the first maximum sustainable load and the second maximum sustainable load are determined after a first iteration that produced that version of the three dimensional shape and before a second iteration to modify that version to generate a next version of the three dimensional shape.

Example 3: The method of Example 1 or Example 2, wherein the location on the preserve geometry is a first location, wherein obtaining the one or more boundary conditions for the numerical simulation comprises obtaining a second location on the preserve geometry at which a load is applied, wherein a first load magnitude at the first location is different from a second load magnitude at the second location, wherein at least one direction for the load at the second location is assigned, wherein the numerical simulation is performed using the direction of the load at the first location and the direction of the load at the second location, wherein the maximum sustainable load is determined for each of the first and second locations, and wherein the three dimensional shape of the modeled object is iteratively modified in accordance with a relative difference between the first load magnitude at the first location and the second load magnitude at the second location.

Example 4: The method of any one of the previous Examples, wherein the location on the preserve geometry is a first location, wherein obtaining the one or more boundary conditions for the numerical simulation comprises

obtaining a second location on the preserve geometry at which a load is applied, wherein the first location and the second location are i) on separate preserve bodies part of the preserve geometry or ii) on separate surface of a single preserve body part of the preserve geometry, and
obtaining a relative difference between a first load magnitude of the load applied at the first location and a second load magnitude of the load applied at the second location,
wherein the three dimensional shape of the modeled object is iteratively modified in accordance with the relative difference between the first load magnitude at the first location and the second load magnitude at the second location, and wherein the relative difference is used to distribute the predefined, not-user specified load magnitude for the load at the first and second locations.

Example 5: The method of any one of the previous Examples, wherein determining the respective maximum sustainable load for each of the two or more versions of the modified three dimensional shape comprises, for each version:

computing, for a specified material, a ratio between an allowable stress limit for the version of the three dimensional shape of the modeled object and a maximum stress experienced by the modeled object, wherein the allowable stress limit and the maximum stress are determined for the predefined, not-user-specified load magnitude applied at the location on the preserve geometry; and
applying the ratio to the predefined, not-user specified load magnitude to determine the maximum sustainable load by the modeled object at the location where load is applied.

Example 6: The method of Example 5, comprising:

for at least one iteration of the iterative modification, pre-computing a maximum stress estimated to be experienced by the modeled object based on applying the load of the predefined, not-user-specified load magnitude at the location on the preserve geometry, wherein the maximum stress is pre-computed as an approximation for isotropic materials having a Poisson ratio approximated to a predefined value,
wherein pre-computing the maximum stress is used as the maximum stress when computing the ratio, wherein the specified material for manufacturing the modeled object is an isotropic material.

Example 7: The method of Example 6, comprising:

obtaining a set of materials specified for the modeled object for use in manufacturing, wherein the iteratively modifying comprises for each iteration of the iterative modification:
computing a first ratio for a first specified material and a second ratio for a second specified material, the first and the second specified materials being isotropic materials, wherein computing the first and second ratios comprises:

dividing an allowable stress limit for the modeled object of a respective first or second specified material to the pre-computed maximum stress to determine the first and the second ratios as approximations for isotropic materials; and

determining a first maximum sustainable load for the first specified material and a second maximum sustainable load for the second specified material, wherein the first and the second maximum sustainable loads are associated with the same version of the modified shape but for different specified materials.

Example 8 The method of any one of the previous Examples, wherein obtaining the one or more boundary conditions comprises obtaining a user-provided desired load magnitude for the numerical simulation, and wherein the method comprises:
presenting to the user an indication of a difference between a maximum sustainable load for at least one of the two or more versions of the modeled object and the user-provided desired maximum load.

Example 9 The method of any one of the previous Examples, wherein assigning the at least one direction for the load at the location comprises:
selecting the least one direction for the load from one or more directions in a Cartesian coordinate system defined for a surface of the preserve geometry including the location at which the load is applied.

Example 10 The method of any one of the previous Examples, wherein assigning the at least one direction for the load at the location when no specified direction is included in the one or more boundary conditions comprises:

identifying a surface of at least a portion of the preserve geometry that is in contact with another surface of another part in an assembly of parts including the preserve geometry;
identifying the location at the surface of at least the portion of the preserve geometry as a contact location between at least the portion of the preserve geometry and the other surface of the other part; and
assigning the at least one direction for the load at the identified location as a direction of a surface normal of the surface including the identified location.

Example 11 The method of any of the previous Examples, wherein the two or more versions of the modeled object are presented consecutively one after another during the iterative modification of the three dimensional shape, wherein receiving the user selection of one of the two or more versions of the modeled object is in response to a request to interrupt the iterative modification, wherein the method comprises:

receiving an indication of a user-defined load magnitude to be sustained at the location; and
in response to the received indication, presenting the user selected version of the modeled object with a different maximum sustainable load associated with a different material, wherein the different maximum sustainable load is closer to the indication of the user-defined load magnitude compared to the respective maximum sustainable load presented with the user selected version of the two or more versions of the modeled object.

Example 12 The method of any one of the previous Examples, comprising:

generating a toolpath specification for a manufacturing machine using the user selected version of the three dimensional shape; and
manufacturing at least a portion of the physical structure, or a mold for the physical structure, with the manufacturing machine using the toolpath specification.

Similar operations and processes as described in Examples 1 to 12 can be performed in a system comprising at least one process and a memory communicatively coupled to the at least one processor where the memory stores instructions that when executed cause the at least one processor to perform the operations. Further, a non-transitory computer-readable medium storing instructions which, when executed, cause at least one processor to perform the operations as describes in any one of the Examples 1 to 12 can also be implemented.

Example 13: A method comprising:

obtaining a design space for a modeled object and one or more boundary conditions for numerical simulation that employs a linear analysis associated with an observable quantity for a physical structure, wherein the modeled object corresponds to the physical structure and comprises a preserve geometry, and wherein the one or more boundary conditions comprise a location on the preserve geometry at which a load is to be applied;
iteratively modifying a three dimensional shape of the modeled object in the design space in accordance with a physical response of the modeled object determined by the numerical simulation, wherein the iterative modifying comprises

iteratively generating two or more versions of the three dimensional shape without applying an optimization constraint on the observable quantity, and
determining a respective maximum sustainable load for each of the two or more versions of the modified three dimensional shape at least by calculating a ratio between an allowable limit of the observable quantity for the version of the three dimensional shape of the modeled object and a maximum value for the observable quantity as experienced by the modeled object at the location; and

presenting to a user the two or more versions of the modeled object having different shapes produced by the iteratively modifying of the three dimensional shape, including presenting the respective maximum sustainable load for each of the two or more versions of the modeled object.

Example 14: The method of Example 13, wherein the respective maximum sustainable load for each of the two or more versions is determined based on using an arbitrary load magnitude to determine the maximum value for the observable quantity as experienced by each of the two or more version, and wherein each version of the two or more versions when associated with a first material is determined to withstand a corresponding first maximum sustainable load that is different from a corresponding second maximum sustainable load that is determined for the same version of the modeled object when associated with a second, different material.

Example 15: The method of Example 13 or Example 14, wherein the location on the preserve geometry is a first location, wherein obtaining the one or more boundary conditions for the numerical simulation comprises

obtaining a second location on the preserve geometry at which a load is applied, wherein the first location and the second location are i) on separate preserve bodies part of the preserve geometry or ii) on separate surface of a single preserve body part of the preserve geometry; and

obtaining a relative difference between a first load magnitude of the load applied at the first location and a second load magnitude of the load applied at the second location,

wherein the three dimensional shape of the modeled object is iteratively modified in accordance with the relative difference between the first load magnitude at the first location and the second load magnitude at the second location,

wherein the maximum sustainable load for each of the two or more versions is determined based on an arbitrary load magnitude, and wherein the relative difference between the first load magnitude and the second load magnitude is used to distribute the arbitrary load magnitude for the load at the first and second locations.

Similar operations and processes as described in Examples 13 to 15 can be performed in a system comprising at least one process and a memory communicatively coupled to the at least one processor where the memory stores instructions that when executed cause the at least one processor to perform the operations. Further, a non-transitory computer-readable medium storing instructions which, when executed, cause at least one processor to perform the operations as describes in any one of the Examples 13 to 15 can also be implemented.

In some implementations, features of the examples 13 to 15 can be combined with features from previous presented Examples 1 to 12 related to generative design modifications where the maximum sustainable load is determined based on a predetermined, not-user-specified load magnitude.

EMBODIMENTS

Although the present invention is defined in the claims, it should be understood that the present invention can also (alternatively) be defined in accordance with the following embodiments:

1. A method comprising:

obtaining a design space for a modeled object and one or more boundary conditions for numerical simulation that employs a linear analysis, wherein the modeled object corresponds to a physical structure and comprises a preserve geometry, and wherein the one or more boundary conditions comprise a location on the preserve geometry at which a load is to be applied;

checking whether the one or more boundary conditions include a specified direction for the load at the location;

assigning at least one direction for the load at the location when no specified direction is included in the one or more boundary conditions;

iteratively modifying a three dimensional shape of the modeled object in the design space in accordance with a physical response of the modeled object determined by the numerical simulation performed using either the specified direction or the at least one direction for the load at the location, wherein the iterative modification comprises determining a respective maximum sustainable load for each of two or more versions of the modified three dimensional shape, wherein the maximum sustainable load is determined based on a predefined, not-user-specified load magnitude for the load at the location;

presenting to a user the two or more versions of the modeled object having different shapes produced by the iteratively modifying of the three dimensional shape, including presenting the respective maximum sustainable load for each of the two or more versions of the modeled object; and

receiving a user selection of one of the two or more versions of the modeled object, wherein the two or more versions are useable in manufacturing the physical structure using one or more computer-controlled manufacturing systems.

2. The method of embodiment 1, wherein the iteratively modifying comprises iteratively generating the two or more versions of the three dimensional shape without use of a stress constraint, wherein the linear analysis is linear stress analysis, wherein each version of the two or more versions when associated with a first material is determined to withstand a corresponding first maximum sustainable load that is different from a corresponding second maximum sustainable load that is determined for the same version of the modeled object when associated with a second, different material, and wherein both the first maximum sustainable load and the second maximum sustainable load are determined after a first iteration that produced that version of the three dimensional shape and before a second iteration to modify that version to generate a next version of the three dimensional shape.

3. The method of embodiment 1, wherein the location on the preserve geometry is a first location, wherein obtaining the one or more boundary conditions for the numerical simulation comprises obtaining a second location on the preserve geometry at which a load is applied, wherein a first load magnitude at the first location is different from a second load magnitude at the second location, wherein at least one direction for the load at the second location is assigned, wherein the numerical simulation is performed using the direction of the load at the first location and the direction of the load at the second location, wherein the maximum sustainable load is determined for each of the first and second locations, and wherein the three dimensional shape of the modeled object is iteratively modified in accordance with a relative difference between the first load magnitude at the first location and the second load magnitude at the second location.

4. The method of embodiment 1, wherein the location on the preserve geometry is a first location, wherein obtaining the one or more boundary conditions for the numerical simulation comprises

obtaining a second location on the preserve geometry at which a load is applied, wherein the first location and the second location are i) on separate preserve bodies part of the preserve geometry or ii) on separate surface of a single preserve body part of the preserve geometry, and
obtaining a relative difference between a first load magnitude of the load applied at the first location and a second load magnitude of the load applied at the second location,
wherein the three dimensional shape of the modeled object is iteratively modified in accordance with the relative difference between the first load magnitude at the first location and the second load magnitude at the second location, and wherein the relative difference is used to distribute the predefined, not-user specified load magnitude for the load at the first and second locations.

5. The method of embodiment 1, wherein determining the respective maximum sustainable load for each of the two or more versions of the modified three dimensional shape comprises, for each version:

computing, for a specified material, a ratio between an allowable stress limit for the version of the three dimensional shape of the modeled object and a maximum stress experienced by the modeled object, wherein the allowable stress limit and the maximum stress are determined for the predefined, not-user-specified load magnitude applied at the location on the preserve geometry; and
applying the ratio to the predefined, not-user specified load magnitude to determine the maximum sustainable load by the modeled object at the location where load is applied.

6. The method of embodiment 5, comprising:

for at least one iteration of the iterative modification, pre-computing a maximum stress estimated to be experienced by the modeled object based on applying the load of the predefined, not-user-specified load magnitude at the location on the preserve geometry, wherein the maximum stress is pre-computed as an approximation for isotropic materials having a Poisson ratio approximated to a predefined value,
wherein pre-computing the maximum stress is used as the maximum stress when computing the ratio, wherein the specified material for manufacturing the modeled object is an isotropic material.

7. The method of embodiment 6, comprising:

obtaining a set of materials specified for the modeled object for use in manufacturing, wherein the iteratively modifying comprises for each iteration of the iterative modification:
computing a first ratio for a first specified material and a second ratio for a second specified material, the first and the second specified materials being isotropic materials, wherein computing the first and second ratios comprises:
dividing an allowable stress limit for the modeled object of a respective first or second specified material to the pre-computed maximum stress to determine the first and the second ratios as approximations for isotropic materials; and

determining a first maximum sustainable load for the first specified material and a second maximum sustainable load for the second specified material, wherein the first and the second maximum sustainable loads are associated with the same version of the modified shape but for different specified materials.

8. The method of embodiment 1, wherein obtaining the one or more boundary conditions comprises obtaining a user-provided desired load magnitude for the numerical simulation, and wherein the method comprises:
presenting to the user an indication of a difference between a maximum sustainable load for at least one of the two or more versions of the modeled object and the user-provided desired maximum load.

9. The method of embodiment 1, wherein assigning the at least one direction for the load at the location comprises:
selecting the least one direction for the load from one or more directions in a Cartesian coordinate system defined for a surface of the preserve geometry including the location at which the load is applied.

10. The method of embodiment 1, wherein assigning the at least one direction for the load at the location when no specified direction is included in the one or more boundary conditions comprises:

identifying a surface of at least a portion of the preserve geometry that is in contact with another surface of another part in an assembly of parts including the preserve geometry;
identifying the location at the surface of at least the portion of the preserve geometry as a contact location between at least the portion of the preserve geometry and the other surface of the other part; and
assigning the at least one direction for the load at the identified location as a direction of a surface normal of the surface including the identified location.

11. The method of embodiment 1, wherein the two or more versions of the modeled object are presented consecutively one after another during the iterative modification of the three dimensional shape, wherein receiving the user selection of one of the two or more versions of the modeled object is in response to a request to interrupt the iterative modification, wherein the method comprises:

receiving an indication of a user-defined load magnitude to be sustained at the location; and
in response to the received indication, presenting the user selected version of the modeled object with a different maximum sustainable load associated with a different material, wherein the different maximum sustainable load is closer to the indication of the user-defined load magnitude compared to the respective maximum sustainable load presented with the user selected version of the two or more versions of the modeled object.

12. The method of embodiment 1, comprising:

generating a toolpath specification for a manufacturing machine using the user selected version of the three dimensional shape; and
manufacturing at least a portion of the physical structure, or a mold for the physical structure, with the manufacturing machine using the toolpath specification.

13. A system comprising:

a non-transitory storage medium having instructions of a computer aided design program stored thereon; and
one or more data processing apparatus configured to run the instructions of the computer aided design program to cause the one or more data processing apparatus to perform operations comprising

obtaining a design space for a modeled object and one or more boundary conditions for numerical simulation that employs a linear analysis, wherein the modeled object corresponds to a physical structure and comprises a preserve geometry, and wherein the one or more boundary conditions comprise a location on the preserve geometry at which a load is to be applied;
checking whether the one or more boundary conditions include a specified direction for the load at the location;
assigning at least one direction for the load at the location when no specified direction is included in the one or more boundary conditions;
iteratively modifying a three dimensional shape of the modeled object in the design space in accordance with a physical response of the modeled object determined by the numerical simulation performed using either the specified direction or the at least one direction for the load at the location, wherein the iterative modification comprises determining a respective maximum sustainable load for each of two or more versions of the modified three dimensional shape, wherein the maximum sustainable load is determined based on a predefined, not-user-specified load magnitude for the load at the location;

presenting to a user the two or more versions of the modeled object having different shapes produced by the iteratively modifying of the three dimensional shape, including presenting the respective maximum sustainable load for each of the two or more versions of the modeled object; and

receiving a user selection of one of the two or more versions of the modeled object, wherein the two or more versions are useable in manufacturing the physical structure using one or more computer-controlled manufacturing systems.

14. The system of embodiment 13, wherein the iteratively modifying comprises iteratively generating the two or more versions of the three dimensional shape without use of a stress constraint, wherein the linear analysis is linear stress analysis, wherein each version of the two or more versions when associated with a first material is determined to withstand a corresponding first maximum sustainable load that is different from a corresponding second maximum sustainable load that is determined for the same version of the modeled object when associated with a second, different material, and wherein both the first maximum sustainable load and the second maximum sustainable load are determined after a first iteration that produced that version of the three dimensional shape and before a second iteration to modify that version to generate a next version of the three dimensional shape.

15. The method of embodiment 1, wherein the location on the preserve geometry is a first location, wherein obtaining the one or more boundary conditions for the numerical simulation comprises obtaining a second location on the preserve geometry at which a load is applied, wherein a first load magnitude at the first location is different from a second load magnitude at the second location, wherein at least one direction for the load at the second location is assigned, wherein the numerical simulation is performed using the direction of the load at the first location and the direction of the load at the second location, wherein the maximum sustainable load is determined for each of the first and second locations, and wherein the three dimensional shape of the modeled object is iteratively modified in accordance with a relative difference between the first load magnitude at the first location and the second load magnitude at the second location.

16. The system of embodiment 14, wherein the location on the preserve geometry is a first location, wherein obtaining the one or more boundary conditions for the numerical simulation comprises

obtaining a second location on the preserve geometry at which a load is applied, wherein the first location and the second location are i) on separate preserve bodies part of the preserve geometry or ii) on separate surface of a single preserve body part of the preserve geometry, and

obtaining a relative difference between a first load magnitude of the load applied at the first location and a second load magnitude of the load applied at the second location,

wherein the three dimensional shape of the modeled object is iteratively modified in accordance with the relative difference between the first load magnitude at the first location and the second load magnitude at the second location, and wherein the relative difference is used to distribute the predefined, not-user specified load magnitude for the load at the first and second locations.

17. The system of embodiment 14, wherein determining the respective maximum sustainable load for each of the two or more versions of the modified three dimensional shape comprises, for each version:

computing, for a specified material, a ratio between an allowable stress limit for the version of the three dimensional shape of the modeled object and a maximum stress experienced by the modeled object, wherein the allowable stress limit and the maximum stress are determined for the predefined, not-user-specified load magnitude applied at the location on the preserve geometry; and

applying the ratio to the predefined, not-user specified load magnitude to determine the maximum sustainable load by the modeled object at the location where load is applied.

18. A non-transitory computer-readable medium encoding a program operable to cause one or more data processing apparatus to perform operations comprising:

obtaining a design space for a modeled object and one or more boundary conditions for numerical simulation that employs a linear analysis associated with an observable quantity for a physical structure, wherein the modeled object corresponds to the physical structure and comprises a preserve geometry, and wherein the one or more boundary conditions comprise a location on the preserve geometry at which a load is to be applied; iteratively modifying a three dimensional shape of the modeled object in the design space in accordance with a physical response of the modeled object determined by the numerical simulation, wherein the iterative modifying comprises

iteratively generating two or more versions of the three dimensional shape without applying an optimization constraint on the observable quantity, and

determining a respective maximum sustainable load for each of the two or more versions of the modified three dimensional shape at least by calculating a ratio between an allowable limit of the observable quantity for the version of the three dimensional shape of the modeled object and a maximum value for the observable quantity as experienced by the modeled object at the location; and

presenting to a user the two or more versions of the modeled object having different shapes produced by the iteratively modifying of the three dimensional shape, including presenting the respective maximum sustainable load for each of the two or more versions of the modeled object.

19. The computer-readable medium of embodiment 18, wherein the respective maximum sustainable load for each of the two or more versions is determined based on using an arbitrary load magnitude to determine the maximum value for the observable quantity as experienced by each of the two or more version, and wherein each version of the two or more versions when associated with a first material is determined to withstand a corresponding first maximum sustainable load that is different from a corresponding second maximum sustainable load that is determined for the same version of the modeled object when associated with a second, different material.

20. The computer-readable medium of embodiment 18, wherein the location on the preserve geometry is a first location, wherein obtaining the one or more boundary conditions for the numerical simulation comprises

obtaining a second location on the preserve geometry at which a load is applied, wherein the first location and the second location are i) on separate preserve bodies part of the preserve geometry or ii) on separate surface of a single preserve body part of the preserve geometry; and

obtaining a relative difference between a first load magnitude of the load applied at the first location and a second load magnitude of the load applied at the second location,

wherein the three dimensional shape of the modeled object is iteratively modified in accordance with the relative difference between the first load magnitude at the first location and the second load magnitude at the second location,

wherein the of the maximum sustainable load for each of the two or more versions is determined based on an arbitrary load magnitude, and wherein the relative difference between the first load magnitude and the second load magnitude is used to distribute the arbitrary load magnitude for the load at the first and second locations.

## Claims

1. A method comprising:

obtaining a design space for a modeled object and one or more boundary conditions for numerical simulation that employs a linear analysis, wherein the modeled object corresponds to a physical structure and comprises a preserve geometry, and wherein the one or more boundary conditions comprise a location on the preserve geometry at which a load is to be applied;

checking whether the one or more boundary conditions include a specified direction for the load at the location;

assigning at least one direction for the load at the location when no specified direction is included in the one or more boundary conditions;

iteratively modifying a three dimensional shape of the modeled object in the design space in accordance with a physical response of the modeled object determined by the numerical simulation performed using either the specified direction or the at least one direction for the load at the location, wherein the iterative modification comprises determining a respective maximum sustainable load for each of two or more versions of the modified three dimensional shape, wherein the maximum sustainable load is determined based on a predefined, not-user-specified load magnitude for the load at the location;

presenting to a user the two or more versions of the modeled object having different shapes produced by the iteratively modifying of the three dimensional shape, including presenting the respective maximum sustainable load for each of the two or more versions of the modeled object; and

receiving a user selection of one of the two or more versions of the modeled object, wherein the two or more versions are useable in manufacturing the physical structure using one or more computer-controlled manufacturing systems.

2. The method of claim 1, wherein the iteratively modifying comprises iteratively generating the two or more versions of the three dimensional shape without use of a stress constraint, wherein the linear analysis is linear stress analysis, wherein each version of the two or more versions when associated with a first material is determined to withstand a corresponding first maximum sustainable load that is different from a corresponding second maximum sustainable load that is determined for the same version of the modeled object when associated with a second, different material, and wherein both the first maximum sustainable load and the second maximum sustainable load are determined after a first iteration that produced that version of the three dimensional shape and before a second iteration to modify that version to generate a next version of the three dimensional shape.

3. The method of claim 1 or claim 2, wherein the location on the preserve geometry is a first location, wherein obtaining the one or more boundary conditions for the numerical simulation comprises obtaining a second location on the preserve geometry at which a load is applied, wherein a first load magnitude at the first location is different from a second load magnitude at the second location, wherein at least one direction for the load at the second location is assigned, wherein the numerical simulation is performed using the direction of the load at the first location and the direction of the load at the second location, wherein the maximum sustainable load is determined for each of the first and second locations, and wherein the three dimensional shape of the modeled object is iteratively modified in accordance with a relative difference between the first load magnitude at the first location and the second load magnitude at the second location.

4. The method of any one of the preceding claims, wherein the location on the preserve geometry is a first location, wherein obtaining the one or more boundary conditions for the numerical simulation comprises

obtaining a second location on the preserve geometry at which a load is applied, wherein the first location and the second location are i) on separate preserve bodies part of the preserve geometry or ii) on separate surface of a single preserve body part of the preserve geometry, and

obtaining a relative difference between a first load magnitude of the load applied at the first location and a second load magnitude of the load applied at the second location,

wherein the three dimensional shape of the modeled object is iteratively modified in accordance with the relative difference between the first load magnitude at the first location and the second load magnitude at the second location, and wherein the relative difference is used to distribute the predefined, not-user specified load magnitude for the load at the first and second locations.

5. The method of any one of the preceding claims, wherein determining the respective maximum sustainable load for each of the two or more versions of the modified three dimensional shape comprises, for each version:

computing, for a specified material, a ratio between an allowable stress limit for the version of the three dimensional shape of the modeled object and a maximum stress experienced by the modeled object, wherein the allowable stress limit and the maximum stress are determined for the predefined, not-user-specified load magnitude applied at the location on the preserve geometry; and

applying the ratio to the predefined, not-user specified load magnitude to determine the maximum sustainable load by the modeled object at the location where load is applied.

6. The method of claim 5, comprising:

for at least one iteration of the iterative modification, pre-computing a maximum stress estimated to be experienced by the modeled object based on applying the load of the predefined, not-user-specified load magnitude at the location on the preserve geometry, wherein the maximum stress is pre-computed as an approximation for isotropic materials having a Poisson ratio approximated to a predefined value,

wherein pre-computing the maximum stress is used as the maximum stress when computing the ratio, wherein the specified material for manufacturing the modeled object is an isotropic material.

**7.** The method of claim 6, comprising:

obtaining a set of materials specified for the modeled object for use in manufacturing, wherein the iteratively modifying comprises for each iteration of the iterative modification:
computing a first ratio for a first specified material and a second ratio for a second specified material, the first and the second specified materials being isotropic materials, wherein computing the first and second ratios comprises:
dividing an allowable stress limit for the modeled object of a respective first or second specified material to the pre-computed maximum stress to determine the first and the second ratios as approximations for isotropic materials; and
determining a first maximum sustainable load for the first specified material and a second maximum sustainable load for the second specified material, wherein the first and the second maximum sustainable loads are associated with the same version of the modified shape but for different specified materials.

**8.** The method of any one of the preceding claims, wherein obtaining the one or more boundary conditions comprises obtaining a user-provided desired load magnitude for the numerical simulation, and wherein the method comprises: presenting to the user an indication of a difference between a maximum sustainable load for at least one of the two or more versions of the modeled object and the user-provided desired maximum load.

**9.** The method of any one of the preceding claims, wherein assigning the at least one direction for the load at the location comprises:
selecting the least one direction for the load from one or more directions in a Cartesian coordinate system defined for a surface of the preserve geometry including the location at which the load is applied.

**10.** The method of any one of the preceding claims, wherein assigning the at least one direction for the load at the location when no specified direction is included in the one or more boundary conditions comprises:

identifying a surface of at least a portion of the preserve geometry that is in contact with another surface of another part in an assembly of parts including the preserve geometry;
identifying the location at the surface of at least the portion of the preserve geometry as a contact location between at least the portion of the preserve geometry and the other surface of the other part; and
assigning the at least one direction for the load at the identified location as a direction of a surface normal of the surface including the identified location.

**11.** The method of any one of the preceding claims, wherein the two or more versions of the modeled object are presented consecutively one after another during the iterative modification of the three dimensional shape, wherein receiving the user selection of one of the two or more versions of the modeled object is in response to a request to interrupt the iterative modification, wherein the method comprises:

receiving an indication of a user-defined load magnitude to be sustained at the location; and
in response to the received indication, presenting the user selected version of the modeled object with a different maximum sustainable load associated with a different material, wherein the different maximum sustainable load is closer to the indication of the user-defined load magnitude compared to the respective maximum sustainable load presented with the user selected version of the two or more versions of the modeled object.

**12.** The method of claim 1, comprising:

generating a toolpath specification for a manufacturing machine using the user selected version of the three dimensional shape; and
manufacturing at least a portion of the physical structure, or a mold for the physical structure, with the manufacturing machine using the toolpath specification.

**13.** A system comprising:

a non-transitory storage medium having instructions of a computer aided design program stored thereon; and
one or more data processing apparatus configured to run the instructions of the computer aided design program to cause the one or more data processing apparatus to perform operations according to a method of any one of claims 1 to 12.

**14.** A non-transitory computer-readable medium encoding a program operable to cause one or more data processing apparatus to perform operations comprising:

obtaining a design space for a modeled object and one or more boundary conditions for numerical simulation that employs a linear analysis associated with an observable quantity for a physical structure, wherein the modeled object corresponds to the physical structure and comprises a preserve geometry, and wherein the one or more boundary conditions comprise a location on the preserve geometry at which a load is to be applied; iteratively modifying a three dimensional shape of the modeled object in the design space in accordance with a physical response of the modeled object determined by the numerical simulation, wherein the iterative modifying comprises

iteratively generating two or more versions of the three dimensional shape without applying an optimization constraint on the observable quantity, and
determining a respective maximum sustainable load for each of the two or more versions of the modified three dimensional shape at least by calculating a ratio between an allowable limit of the observable quantity for the version of the three dimensional shape of the modeled object and a maximum value for the observable quantity as experienced by the modeled object at the location; and

presenting to a user the two or more versions of the modeled object having different shapes produced by the iteratively modifying of the three dimensional shape, including presenting the respective maximum sustainable load for each of the two or more versions of the modeled object.

**15.** The computer-readable medium of claim 14, wherein the respective maximum sustainable load for each of the two or more versions is determined based on using an arbitrary load magnitude to determine the maximum value for the observable quantity as experienced by each of the two or more version, and wherein each version of the two or more versions when associated with a first material is determined to withstand a corresponding first maximum sustainable load that is different from a corresponding second maximum sustainable load that is determined for the same version of the modeled object when associated with a second, different material, optionally wherein the location on the preserve geometry is a first location, wherein obtaining the one or more boundary conditions for the numerical simulation comprises

obtaining a second location on the preserve geometry at which a load is applied, wherein the first location and the second location are i) on separate preserve bodies part of the preserve geometry or ii) on separate surface of a single preserve body part of the preserve geometry; and
obtaining a relative difference between a first load magnitude of the load applied at the first location and a second load magnitude of the load applied at the second location,
wherein the three dimensional shape of the modeled object is iteratively modified in accordance with the relative difference between the first load magnitude at the first location and the second load magnitude at the second location, and
wherein the maximum sustainable load for each of the two or more versions is determined based on an arbitrary load magnitude, and wherein the relative difference between the first load magnitude and the second load magnitude is used to distribute the arbitrary load magnitude for the load at the first and second locations.

100

120  122

134

Remote Computer  **150**
Systems
(e.g., Third Party
Providers)  **116**

SM Machine
(e.g., CNC)
**174**

Computer **110**

CAD Program(s) with Generative
Design Process(es) for Topology
Optimization, including
Generative design shape Optimization
relying on linear static stress analysis
with consideration of application of
load at location(s) on the preserve
geometry
**116**

Network  140

Toolpath
Spec(s)

135

3D
Model(s)

Processor
**112**

Memory
**114**

130

AM Machine
(e.g. SLS)
**170**

118

160

138

118a

120a

FIG. 1

FIG. 2

300

310

FIG. 3A

305

| Automated Generative Design >> |
| --- |
| **Define** \| Explore |
| Bodies to Constrain | 1 Selected x |
| Bodies to Load | Select |
| Obstacles | Select |
| Generate |
| Cancel | OK |

307

315

317

FIG. 3B

| Automated Generative Design >> |
| --- |
| **Define** \| Explore |
| Bodies to Constrain | 1 Selected x |
| Bodies to Load | 2 Selected >> |
| Obstacles | Select |
| Generate |
| Cancel | OK |

312

322

325

330

FIG. 3C

| Automated Generative Design >> |
| --- |
| **Define** \| Explore |
| Bodies to Constrain | 1 Selected x |
| Bodies to Load | 2 Selected >> |
| Obstacles | 3 Selected >> |
| Generate |
| Cancel | OK |

320

**410** Obtain design space, design criteria (including load conditions)

**420** Iteratively modify a three-dimensional shape of a modeled object

**425** Obtain, at a given iteration, a ratio between an allowable stress limit for the modeled object (e.g., as precomputed stress estimate to be experienced by the modeled object for isotropic materials) and a maximum stress experienced by the modeled object, the ratio to be used to determine a maximum sustainable load based on a predefined, not-user-specified load magnitude that is conceptually applied at the location on the preserved geometry to determine the ratio

**430** Generate a set of versions of the modeled objects for a specified isotropic material, each version associated with a respective iteration of the modification and with a corresponding maximum sustainable load as (e.g., the calculation of the max. load is performed based on computations according to a computed  ratio of allowable stress to computed stress or an approximation of the ratio based on a pre-computed ratio for isotropic materials)

**440** Present, at a display device, a shape version with a respective computed max sustainable load magnitude for user preview

# FIG. 4

**Automated Generative Design** >>

Define | **Explore**

Iteration 4

Manufacturing Method Unrestricted ▶

Load Case ①

Material Stainless Steel 316L ▶

This outcome supports a 12 kg load in this direction with a safety factor of 2.0

Go Deeper with Generative Design

Cancel | OK

510

515

505

500

Max: 12kgf

Max: 12kgf

FIG. 5A

**Automated Generative Design**    >>

Define | **Explore**

Iteration         [ 9 ]    ✚

Manufacturing Method    [ Unrestricted ▼ ]

Load Case         (1)

Material          [ Stainless Steel 316L ▼ ]

This outcome supports a 7 kg load in this direction with a safety factor of 2.0

[ Go Deeper with Generative Design ]

[Cancel] [OK]

Max: 7 kgf

Max: 7 kgf

FIG. 5B

EP 4 468 191 A1

EP 4 468 191 A1

**Automated Generative Design**  >>

Define | **Explore**

| | |
|---|---|
| Iteration | 9 ╋ |
| Manufacturing Method | Unrestricted ▼ |
| Load Case | ① |
| Material | Stainless Steel 316L ▼ |

This outcome supports a 7 kg load in this direction with a safety factor of 2.0

Go Deeper with Generative Design

Cancel | OK

540

Max: 5 kgf

545

550

Max: 10 kgf

FIG. 5C

FIG. 6A

**EDIT STRUCTURAL LOAD** >>

| | |
|---|---|
| **Type** | Force ▼ |
| **Targets** | ↖2 Faces X |
| Force per Entry | ☑ |
| **Direction Type** | |
| **Fx** | 0.00 N |
| **Fy** | 50000.00N |
| **Fz** | 0.00N |
| **Charge Units** | |

OK Cancel

EP 4 468 191 A1

640

You are viewing the Design Preview

FIG. 6B

650

You are viewing the Design Preview

Y

Z    X

FIG. 6C

FIG. 7

800

## Data Processing Apparatus

**Applications**      804

CAD Program(s) with Generative Design Process(es) with Auto Maximum Sustainable Load Determination

890

**Operating System**

**Hardware/Firmware**      816

812

Computer Readable Medium

Processor(s)

818

814

Comm. Interface

Additional Device(s)

820

User Interface Device(s)

Network

880

FIG. 8

| Europäisches Patentamt European Patent Office Office européen des brevets | **EUROPEAN SEARCH REPORT** | Application Number EP 24 17 7106 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/285517 A1 (REICHENTAL AVI N [US] ET AL) 4 October 2018 (2018-10-04) | 1,3,4, 8-10,12, 13 | INV. G06F30/17 G06F30/20 |
| Y | * paragraphs [0020] - [0046] * | 2,5-7, 11,14,15 | G06F30/23 G06F111/04 |
|  | ----- | | G06F113/10 |
| Y | DA SILVA GUSTAVO ET AL: "Topology optimization of compliant mechanisms considering stress constraints, manufacturing uncertainty and geometric nonlinearity", COMPUTER METHODS IN APPLIED MECHANICS AND ENGINEERING, vol. 365, 16 March 2020 (2020-03-16), page 112972, XP093207820, AMSTERDAM, NL ISSN: 0045-7825, DOI: 10.1016/j.cma.2020.112972 Retrieved from the Internet: URL:https://pdf.sciencedirectassets.com/27 1868/1-s2.0-S0045782520X00053/1-s2.0-S0045 782520301559/main.pdf?X-Amz-Security-Token =IQoJb3JpZ2luX2VjEIj//////////wEaCXVzLWVhc 3QtMSJHMEUCIQC+spkRMtbXNYjxOL7fBAcdzAM7AZD oBqqJLRctwpOKjAIgQKICJzmv6gDneLfoQw8CBHyaC QEVM18s3McmVuht1psqvAUIwf//////////ARAFGgw wNTkwMDM1N> * page 8, lines 4-7 * * page 9, lines 16-18 * * page 11, lines 1-3; figures 3,4,5 * * page 12, lines 26-32 * * page 14, lines 2-4 * ----- | 2,5-7, 11,14,15 | G06F119/18 |

TECHNICAL FIELDS SEARCHED (IPC)

G06F

The present search report has been drawn up for all claims

| Place of search | Date of completion of the search | Examiner |
|---|---|---|
| Munich | 24 September 2024 | Herzog, Till-Henning |

## ANNEX TO THE EUROPEAN SEARCH REPORT
## ON EUROPEAN PATENT APPLICATION NO.

EP 24 17 7106

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2024

| Patent document cited in search report | Publication date | Patent family member(s) | Publication date |
|---|---|---|---|
| US 2018285517 A1 | 04-10-2018 | US 2018285517 A1 | 04-10-2018 |
| | | WO 2018187291 A2 | 11-10-2018 |

EPO FORM P0459

For more details about this annex : see Official Journal of the European Patent Office, No. 12/82